(19) Europäisches Patentamt
European Patent Office
Office européen des brevets

(11) EP 4 693 420 A1

(12) **EUROPEAN PATENT APPLICATION**
published in accordance with Art. 153(4) EPC

(43) Date of publication:
**11.02.2026 Bulletin 2026/07**

(21) Application number: **24780391.9**

(22) Date of filing: **26.03.2024**

(51) International Patent Classification (IPC):
***H01M 4/02** (2006.01)* ***H01G 11/06** (2013.01)*
***H01G 11/40** (2013.01)* ***H01G 11/68** (2013.01)*
***H01G 11/70** (2013.01)* ***H01M 4/04** (2006.01)*
***H01M 4/13** (2010.01)* ***H01M 4/139** (2010.01)*
***H01M 4/62** (2006.01)* ***H01M 4/66** (2006.01)*
***H01M 4/80** (2006.01)*

(52) Cooperative Patent Classification (CPC):
**H01G 11/06; H01G 11/40; H01G 11/68; H01G 11/70; H01M 4/02; H01M 4/04; H01M 4/13; H01M 4/139; H01M 4/62; H01M 4/66; H01M 4/80;** Y02E 60/10

(86) International application number:
**PCT/JP2024/012122**

(87) International publication number:
**WO 2024/204284 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023056012**
**25.08.2023 JP 2023137490**

(71) Applicant: **Kuraray Co., Ltd.**
**Kurashiki-shi, Okayama 710-0801 (JP)**

(72) Inventors:
- **ARIMA, Junichi**
  **Osaka-shi, Osaka 530-8611 (JP)**
- **IWASAKI, Hideharu**
  **Osaka-shi, Osaka 530-8611 (JP)**
- **TAGO, Shinya**
  **Bizen-shi, Okayama 705-0025 (JP)**
- **NISHITA, Yumika**
  **Bizen-shi, Okayama 705-0025 (JP)**
- **TERASHIMA, Koki**
  **Bizen-shi, Okayama 705-0025 (JP)**

(74) Representative: **Müller-Boré & Partner Patentanwälte PartG mbB**
**Friedenheimer Brücke 21**
**80639 München (DE)**

# (54) ELECTRODE, METHOD FOR PRODUCING ELECTRODE, AND ELECTROCHEMICAL DEVICE

(57) An electrode which includes a current collector having a three-dimensional porous structure, and an active material, and satisfies either one or both of the following conditions (i) and (ii):
(i) where A ($\mu$m) denotes an average opening diameter of the current collector, and B ($\mu$m) denotes a median diameter ($D_{50}$) of the active material, A and B satisfy a relationship of the following formula (1): $0.10 \leq B/A \leq 2.00$ (1);
(ii) the current collector is filled with an active material component containing the active material and a filling rate (%) defined by the following formula (2) is 37% or more,

$$\text{filling rate (\%)} = \beta/(\alpha - \gamma) \times 100 \qquad (2),$$

where $\alpha$ denotes an observation area of the current collector obtained from an electron microscope image of a cross-section in a thickness direction of the electrode, and $\beta$ and $\gamma$ respectively denote projected areas of the active material and the current collector in the observation area calculated using image analysis software.

EP 4 693 420 A1

Fig. 1

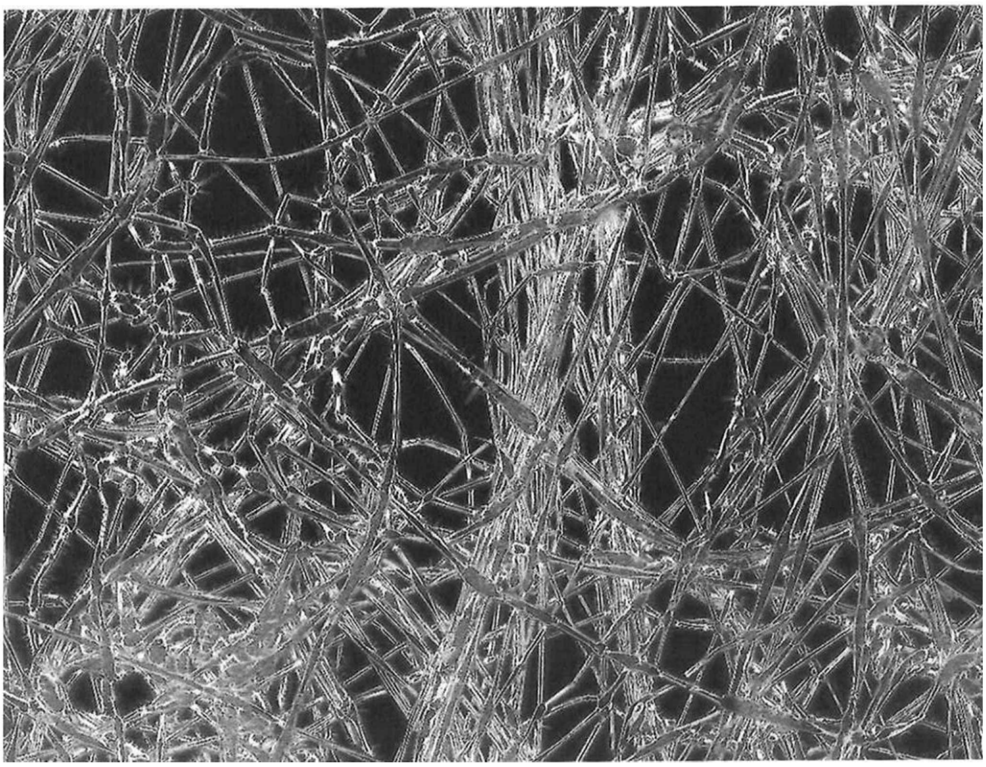

## Description

CROSS REFERENCE TO THE RELATED APPLICATION

This application is based on and claims Convention priority to Japanese patent application Nos. 2023-056012, filed March 30, 2023, and 2023-137490, filed August 25, 2023, the entire disclosures of which are herein incorporated by reference as a part of this application.

FIELD OF THE INVENTION

The present invention relates to an electrode useful for electrochemical devices or the like, a method for producing the same, and an electrochemical device.

BACKGROUND OF THE INVENTION

In recent years, various electrochemical devices have been developed with the widespread use of small terminals such as smartphones and notebook computers as well as electric vehicles, hybrid vehicles, or the like. Among these devices, the use of non-aqueous electrolyte secondary batteries, represented by lithium-ion secondary batteries, has become widespread, and miniaturization and weight reduction of such batteries are promoted for automotive applications, or the like.

For example, Patent Document 1 (WO2022/118692) discloses an electrode using a current collector having a three-dimensional porous structure composed of a conductive body, an air permeability of 0.1 to 600 cc/cm$^2$/sec, and a thickness of less than 100 μm. By this configuration, it is possible to decrease the thickness of electrode, sufficiently reduce the electrode resistance, and obtain satisfactory charge-discharge characteristics.

CONVENTIONAL ART DOCUMENT

PATENT DOCUMENT

Patent Document 1: WO2022/118692

SUMMARY OF THE INVENTION

While Patent Document 1 describes controlling the air permeability of current collector in view of achieving satisfactory liquid permeability of an electrolyte, and reducing the resistance of the electrode by thinning the current collector, there is a room for improvement in achieving practical output performance of a current collector, particularly a current collector having a three-dimensional porous structure.

In light of the above-described problems, an object of the present invention is to provide an electrode that can improve the capacity retention rate of an electrochemical device.

As a result of extensive studies, the inventors have found that the above-described object is achieved by constituting an electrode having the following configuration, and have completed the present invention by conducting further studies based on this finding.

That is, the present invention may include the following aspects.

[Aspect 1]

An electrode including a current collector and an active material, wherein the current collector has a three-dimensional porous structure having an average opening diameter A, the active material has a median diameter ($D_{50}$) B, where the average opening diameter A (μm) and the median diameter ($D_{50}$) B (μm) satisfy a relationship of the following formula (1),

$$0.10 \leq B/A \leq 2.00 \qquad (1).$$

(B/A is preferably 0.13 or more, more preferably 0.15 or more, and is preferably 1.96 or less, more preferably 1.70 or less, further preferably 1.50 or less, and particularly preferably 1.20 or less)

[Aspect 2]

The electrode according to aspect 1, wherein the current collector is filled with an active material component containing the active material, and a filling rate (%) defined by the following formula (2) is 37% or more,

$$\text{filling rate (\%)} = \beta/(\alpha - \gamma) \times 100 \qquad (2),$$

where $\alpha$ denotes an observation area, the observation area is defined by thickness $\times$ observation length of the current collector, which are determined from an electron microscope image (SEM image) of a cross-section in a thickness direction of the electrode, and $\beta$ and $\gamma$ respectively denote projected areas of the active material and the current collector (solid-phase portion of the current collector) in the observation area calculated using image analysis software.

[Aspect 3]

An electrode including a current collector having a three-dimensional porous structure, wherein the current collector is filled with an active material component containing an active material, and a filling rate (%) defined by the following formula (2) is 37% or more (preferably 45% or more),

$$\text{filling rate (\%)} = \beta/(\alpha - \gamma) \times 100 \qquad (2),$$

where $\alpha$ denotes an observation area, the observation area is defined by thickness $\times$ observation length of the current collector, which are determined from an electron microscope image of a cross-section in a thickness direction of the electrode, and $\beta$ and $\gamma$ respectively denote projected areas of the active material and the current collector (solid-phase portion of the current collector) in the observation area calculated using image analysis software.

[Aspect 4]

The electrode according to aspect 3, wherein the current collector has an average opening diameter A, the active material has a median diameter ($D_{50}$) B, and the average opening diameter A ($\mu$m) and the median diameter ($D_{50}$) B ($\mu$m) satisfy a relationship of the following formula (1),

$$0.10 \leq B/A \leq 2.00 \qquad (1).$$

(B/A is preferably 0.13 or more, more preferably 0.15 or more, and is preferably 1.96 or less, more preferably 1.70 or less, further preferably 1.50 or less, and particularly preferably 1.20 or less)

[Aspect 5]

The electrode according to any one of aspects 1 to 4, wherein the current collector has a thickness of 100 $\mu$m or less (e.g., 5 to 80 $\mu$m, more preferably 5 to 60 $\mu$m, further preferably 5 to 45 $\mu$m, and particularly preferably 10 to 30 $\mu$m).

[Aspect 6]

The electrode according to any one of aspects 1 to 5, wherein the current collector has an air permeability of 0.1 to 600 cc/cm$^2$/sec (preferably 1 cc/cm$^2$/sec or more, more preferably 10 cc/cm$^2$/sec or more, and preferably 500 cc/cm$^2$/sec or less, more preferably 400 cc/cm$^2$/sec or less).

[Aspect 7]

The electrode according to any one of aspects 1 to 6, wherein the current collector includes a non-conductive structure and a metal coating.

[Aspect 8]

The electrode according to aspect 7, wherein the non-conductive structure includes a fiber aggregate having an average fiber diameter of 10 $\mu$m or less.

[Aspect 9]

The electrode according to aspect 8, wherein the fiber aggregate is a nonwoven fabric.

[Aspect 10]

The electrode according to any one of aspects 7 to 9, wherein the metal coating includes at least one metal selected from the group consisting of aluminum, copper, nickel, gold, and silver.

[Aspect 11]

The electrode according to any one of aspects 1 to 10, wherein the active material is capable of adsorbing and desorbing electrolyte ions.

[Aspect 12]

The electrode according to any one of aspects 1 to 11, further including a conductive agent.

[Aspect 13]

The electrode according to any one of aspects 1 to 12, wherein the active material has a median diameter of 0.1 to 100 μm, for example, 0.1 to 16 μm.

[Aspect 14]

The electrode according to any one of aspects 1 to 13, wherein the current collector is filled with an active material component including the active material and a water-insoluble binder.

[Aspect 15]

A method for producing the electrode according to any one of aspects 1 to 14, the method including at least:

a step of preparing a current collector having a three-dimensional porous structure having an average opening diameter A; and
a step of forming an active material layer including an active material having a median diameter B on the current collector, wherein
the average opening diameter A and the median diameter B satisfy the following formula (1),

$$0.10 \leq B/A \leq 2.00 \qquad (1).$$

(B/A is preferably 0.13 or more, more preferably 0.15 or more, and is preferably 1.96 or less, more preferably 1.70 or less, further preferably 1.50 or less, and particularly preferably 1.20 or less)

[Aspect 16]

A method for producing the electrode according to any one of aspects 1 to 14, the method including at least a step of filling a current collector having a three-dimensional porous structure with an active material component.

[Aspect 17]

The method for producing the electrode according to aspect 16, wherein the current collector before being filled with the active material component has an air permeability of 0.1 to 600 $cc/cm^2/sec$.

[Aspect 18]

The method for producing the electrode according to aspect 16 or 17, wherein the current collector before being filled with the active material component has a thickness of 100 μm or less.

[Aspect 19]

An electrochemical device including the electrode according to any one of aspects 1 to 14.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

EFFECT OF THE INVENTION

The electrode of the present invention can improve the capacity retention rate of an electrochemical device including the electrode.

BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims.

[Fig. 1] Fig. 1 is a microscope image (at 200x magnification) for illustrating a method for measuring the average opening diameter of a current collector of a first embodiment of the present invention;
[Fig. 2] Fig. 2 is a scanning electron microscope image (at 2000x magnification) of a cross-section of an electrode for illustrating a method for measuring the filling rate of an electrode of a second embodiment of the present invention;
[Fig. 3] Fig. 3 is a schematic diagram for illustrating portions of a current collector and an active material in an observation area in the scanning electron microscope image in Fig. 2; and
[Fig. 4] Fig. 4 is a schematic cross-sectional view showing an example of the configuration of an electrochemical device.

DESCRIPTION OF EMBODIMENTS

An electrode of the present invention includes a current collector having a three-dimensional porous structure, and an active material, wherein the electrode satisfies either one or both of the following conditions (i) and (ii):

(i) where an average opening diameter of the current collector is denoted by A (μm) and a median diameter ($D_{50}$) of the active material is denoted by B (μm), A and B satisfy a relationship of the following formula (1),

$$0.10 \leq B/A \leq 2.00 \qquad (1);$$

and
(ii) the current collector is filled with an active material component containing the active material and a filling rate (%) defined by the following formula (2) is 37% or more,

$$\text{filling rate (\%)} = \beta/(\alpha - \gamma) \times 100 \qquad (2),$$

where $\alpha$ denotes an observation area of the current collector obtained from an electron microscope image (SEM image) of a cross-section in a thickness direction of the electrode, and $\beta$ and $\gamma$ respectively denote projected areas of the active material and the current collector (solid-phase portion of the current collector) in the observation area calculated using image analysis software.

The electrode of the present invention is suitable as an electrode for electrochemical devices. Applicable electrochemical devices include secondary batteries such as lithium-ion secondary batteries, nickel-metal hydride secondary batteries, and nickel-cadmium secondary batteries, capacitors such as electric double-layer capacitors, or the like. Particularly, the electrochemical devices may be non-aqueous electrolyte secondary batteries (e.g., lithium-ion secondary batteries, sodium-ion batteries, lithium-sulfur batteries, lithium-air batteries, all-solid-state batteries, organic radical batteries, or the like), and may be more preferably lithium-ion secondary batteries.

In the following, a description will be given with an electrode for a non-aqueous electrolyte secondary battery as

an example.

First Embodiment

[Current Collector]

The current collector is a conductive body having a three-dimensional porous structure (hereinafter sometimes referred to simply as porous structure), where the three-dimensional porous structure means a structure having porosity in which voids are distributed in a three-dimensional space. The current collector has an average opening diameter A obtained by averaging the opening diameters of multiple openings formed by the porous structure.

(Three-Dimensional Porous Structure)

To achieve a three-dimensional porous structure, the current collector can be configured using a fibrous structure (fiber aggregate) such as a woven fabric or a nonwoven fabric (including paper), a resin foam such as expanded urethane, or the like. The method for obtaining a conductive body having a porous structure as the current collector is not limited to a specific method, and a porous conductive body may be formed using a known conductive material used for electrodes. The porous conductive body may be in the form of a nonwoven fabric.

In addition, in the case where a conductive body having a three-dimensional porous composite structure is composed of a non-conductive structure and a metal coating formed on the non-conductive structure, the non-conductive structure is not particularly limited to a specific one and may be a known resin foam or a fibrous structure (e.g., a woven fabric or a nonwoven fabric) including non-conductive fibers.

Fig. 1 is a microscope image for illustrating a method for measuring an average opening diameter of a current collector according to an embodiment of the present invention. First, a sample is cut out from a three-dimensional porous structure so as to have a predetermined shape in the plane direction of the current collector. While a portion of the current collector may be peeled off from the surface to a predetermined depth (e.g., 100 μm or less) in the thickness direction before measurement in view of intrusion of the active material into the current collector, usually, measurement may be performed over the entire thickness of the current collector. Then, an enlarged photograph of the cut sample can be obtained by placing the cut sample on a base (e.g., a black flat plate) and taking an image thereof.

Fig. 1 may be used as an example for an explanation. Fig. 1 is an enlarged photograph showing the sample, where the cut sample is fixed by sandwiching the sample between upper and lower slide glasses, and is then placed on a black flat plate. As shown in the photograph, fiber materials constituting the sample overlap each other in the depth (thickness) direction. On the other hand, the spaces where no fiber materials are present, that is, the spaces where the base portion can be observed, can function as through holes in the depth direction. In this case, the spaces on the base portion surrounded by the fiber materials are regarded as through holes. Therefore, average opening diameter of the current collector can be obtained by determining the areas of each through holes by imaging, calculating the diameters of circles having the same, and calculating the average of the diameters. Thus obtained average value can be regarded as average opening diameter.

The number of through holes to be measured is appropriately determined based on the size of the through holes in the sample. Where large through holes are present in the image, the number of through holes to be used for measurement is reduced. Normally, an average value is calculated using 500 to 5000 through holes.

An area of the through hole may be defined as an average area of through holes each having area of 2 $\mu m^2$ or more under the observation so as to reduce error in measurement.

In the case where the current collector is a fiber structure, the fibers themselves may exhibit black luster, and thereby showing black appearance. In such a case, in order to distinguish between the black luster portions of the fibers and the through holes recognized by the black color of the black flat plate, the area of a square with one side having a length equal to 0.5 times the average diameter of the fibers may be used as a threshold value, and the areas of the black portions larger than the threshold value may be used as the areas of the through holes.

For example, when the average diameter of the fibers constituting the fiber structure is 4 μm, the average value of areas of through holes observed with an area of not less than 4 $\mu m^2$ corresponding to the area of a square with one side having a length of 2 μm may be adopted.

When measuring an image of an enlarged photograph, it is preferable to binarize the image. For example, an image analysis software ("Multi-file Analysis Application" created by KEYENCE CORPORATION) may be used to binarize the image by setting the software such that black portions and other portions are distinguished from each other.

Preferably, from the viewpoint of improving the electrolyte permeability, the air permeability of the current collector may be 0.1 to 600 $cc/cm^2/sec$. It is considered that there is a correlation between the air permeability and the electrolyte permeability of the current collector. Therefore, where the current collector has high air permeability, it is possible to improve the electrolyte permeability, and to ensure ion conductivity, and thereby reducing the electrode

resistance. On the other hand, where the current collector has low air permeability, it is possible to improve the mechanical strength of the porous structure, and to improve the durability of the current collector and stability of the electrode production.

The air permeability of the current collector is preferably 0.1 $cc/cm^2/sec$ or more, more preferably 1 $cc/cm^2/sec$ or more, and further preferably 10 $cc/cm^2/sec$ or more. On the other hand, the air permeability of the current collector is preferably 600 $cc/cm^2/sec$ or less, more preferably 500 $cc/cm^2/sec$ or less, and further preferably 400 $cc/cm^2/sec$ or less.

For example, the air permeability of the current collector may be 0.1 to 600 $cc/cm^2/sec$, preferably 1 to 500 $cc/cm^2/sec$, and further preferably may be 10 to 400 $cc/cm^2/sec$.

Here, the air permeability of the current collector can be measured by a method explained in the below-described Examples. In the case of measuring a current collector disposed inside the electrode, the air permeability of the current collector may be measured after removing the active material component or the like from the current collector using a solvent or the like.

The thickness of the current collector may be 100 μm or less. When the thickness of the current collector is thin, a battery having a high charge/discharge capacity per unit volume can be obtained. Therefore, the thickness of the current collector is preferably 80 μm or less, more preferably 60 μm or less, even more preferably 45 μm or less, further preferably 40 μm or less, and most preferably 30 μm or less. The lower limit of the thickness of the current collector is not particularly limited to a specific value and is preferably 5 μm or more and more preferably 10 μm or more from the viewpoint of avoiding breakage during the production of batteries and during the handling of batteries. For example, the thickness of the current collector may be preferably 5 to 80 μm, more preferably 5 to 60 μm, further preferably 5 to 45 μm, and particularly preferably 10 to 30 μm.

Here, the thickness of the current collector can be measured, for example, from a scanning electron microscope image (SEM image) of a cross-section taken in the thickness direction of the electrode and specifically can be a value measured by a method explained in the below-described Examples.

The basis weight of the current collector may be, for example, 1.0 to 50 $g/m^2$. The smaller the basis weight of the current collector is, the higher the air permeability, thus reducing the thickness of the current collector. Therefore, the basis weight of the current collector is preferably 15 $g/m^2$ or less, more preferably 12 $g/m^2$ or less, and further preferably 10 $g/m^2$ or less. In view of mechanical strength of the current collector, it is preferable that the basis weight the current collector is as large as possible. The basis weight is preferably 1.0 $g/m^2$ or more, more preferably 2.0 $g/m^2$ or more, and further preferably 3.0 $g/m^2$ or more. Therefore, the basis weight of the current collector is preferably 1.0 to 30 $g/m^2$, and may be more preferably 1.0 to 20 $g/m^2$, further preferably 1.0 to 15 $g/m^2$, particularly preferably 2.0 to 12 $g/m^2$, and even more preferably 3.0 to 10 $g/m^2$.

The current collector may be a body obtained by forming a metal coating on a structure having a non-conductive porous structure (hereinafter sometime referred to as non-conductive porous structure) using a plating method or the like to make a composite structure and impart conductivity to the non-conductive porous structure.

In the case where the conductive body having a three-dimensional porous composite structure includes a non-conductive structure and a metal coating, the non-conductive structure is not particularly limited to a specific one and may be a known resin foam or a fibrous structure composed of non-conductive fibers. Preferably, the conductive body used as the current collector may be a conductive body having a three-dimensional porous composite structure, which is obtained by forming a metal coating on a non-conductive porous structure (particularly a non-conductive fiber structure) to make the composite structure.

Examples of the non-conductive fibers include polyolefin-based fibers, cellulose-based fibers, (meth)acrylic-based fibers, polyvinyl alcohol-based fibers, vinyl chloride-based fibers, styrene-based fibers, polyester-based fibers, polyamide-based fibers, polycarbonate-based fibers, and urethane-based fibers. Among these fibers, from the viewpoint of achieving the above strength, polyester-based fibers such as polyethylene terephthalate fibers, polybutylene terephthalate fibers, polytrimethylene terephthalate fibers, and thermotropic liquid crystalline aromatic polyester fibers are preferred for use. Among these fibers, it is particularly preferred to use polyester-based fibers such as thermotropic liquid crystalline aromatic polyester fibers (e.g., thermotropic liquid crystalline wholly aromatic polyester fibers).

A thermotropic liquid crystalline aromatic polyester constituting the thermotropic liquid crystalline aromatic polyester fibers, particularly a thermotropic liquid crystalline wholly aromatic polyester, is a resin having excellent heat resistance and chemical resistance. In this specification, thermotropic liquid crystallinity refers to a property of exhibiting optical anisotropy (liquid crystallinity) in a melt phase, and a thermotropic liquid crystalline aromatic polyester means a polyester that exhibits thermotropic liquid crystallinity. The thermotropic liquid crystallinity of a sample can be confirmed, for example, by placing a sample on a hot stage, heating the sample under a nitrogen atmosphere, and observing the light transmitted through the sample. The thermotropic liquid crystalline aromatic polyester includes repeating structural units derived from, for example, aromatic diols, aromatic dicarboxylic acids, aromatic hydroxycarboxylic acids, or the like. As long as the effect of the present invention is not impaired, the structural units derived from aromatic diols, aromatic dicarboxylic acids, and aromatic hydroxycarboxylic acids are not particularly limited to a specific chemical composition. Furthermore, the thermotropic liquid crystalline aromatic polyester may include structural units derived from aromatic

diamines, aromatic hydroxy amines, or aromatic aminocarboxylic acids in the range that does not impair the effect of the present invention. For example, preferable structural units may include units shown in Table 1.

[Table 1]

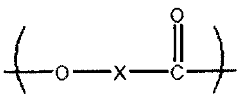 , 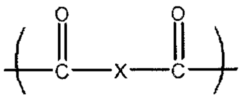 , 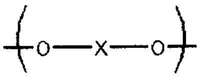 , 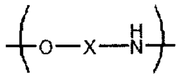

In the formula, m is selected from the following structures.

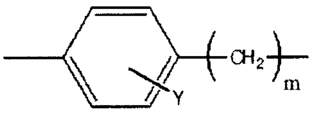 , 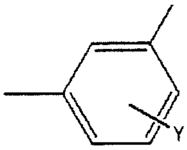 , 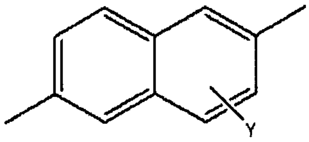 ,

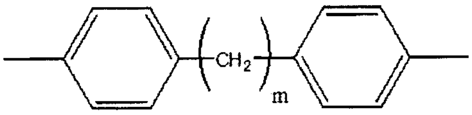 , 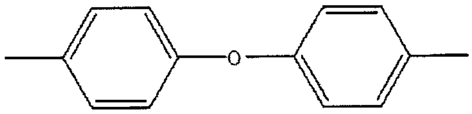 ,

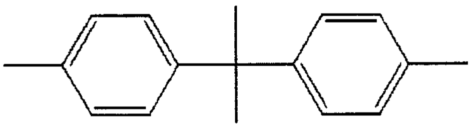 , 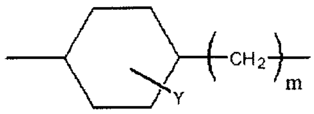 , 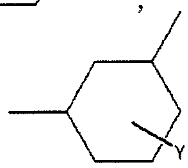

where m is an integer from 0 to 2, Y is a substituent selected from hydrogen atoms halogen atoms aryl groups, aralkyl groups, alyloxy groups, aralkyloxy groups.

Each Y independently denotes a substituent that can be replaced from one substituent to the number of substituents in the range of the replaceable maximum number of aromatic ring or cyclo ring, and specifically, independently denotes a substituent selected from a hydrogen atom, a halogen atom (for example, fluorine atom, chlorine atom, bromine atom, and iodine atom, or the like), an alkyl group (for example, an alkyl group having 1 to 4 carbon atoms such as methyl group, ethyl group, isopropyl group, and t-butyl group, or the like), an alkoxy group (for example, methoxy group, ethoxy group, isopropoxy group, n-butoxy group, or the like), an aryl group (for example, phenyl group, naphthyl group, or the like), an aralkyl group [benzyl group (phenylmethyl group), phenethyl group (phenylethyl group), or the like], an aryloxy group (for example, phenoxy group, or the like), an aralkyloxy group (for example, benzyloxy group, or the like), and others.

As more preferable structural units, structural units as described in examples (1) to (18) shown in the following Tables 2, 3, and 4 may be mentioned. It should be noted that where the structural unit in the formula is a structural unit which can show a plurality of structures, combination of two or more types may be used as structural units for a polymer.

[Table 2]

| | |
|---|---|
| (1) | 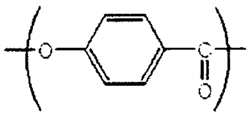 , 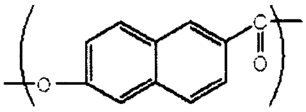 |
| (2) | 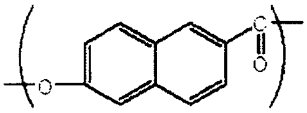 , 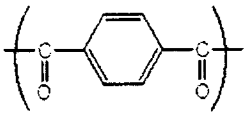 , 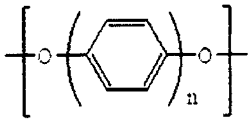 |
| (3) | 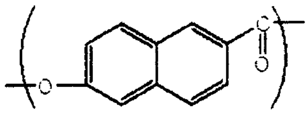 , 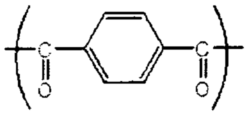 , 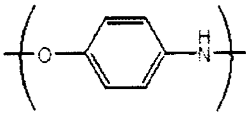 |
| (4) | 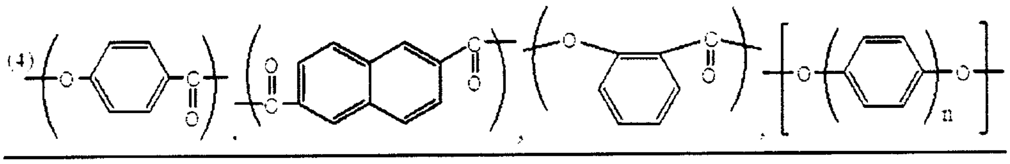 |
| (5) | 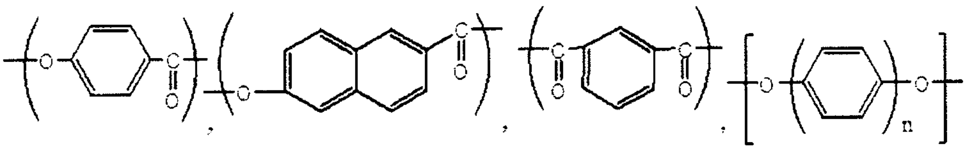 |
| (6) | 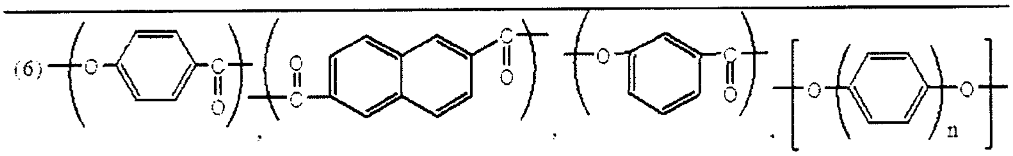 |
| (7) | 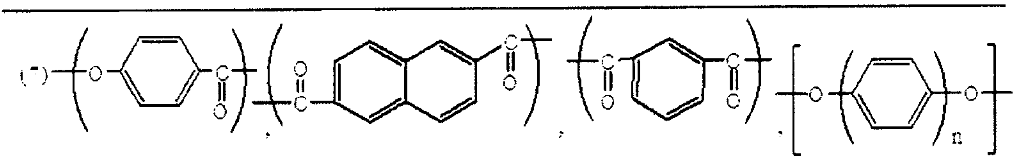 |
| (8) | 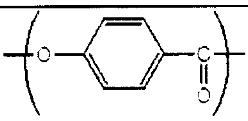 , 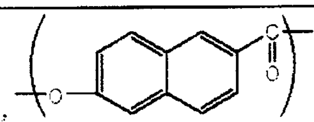 , 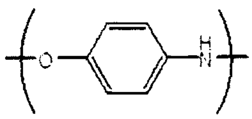 , 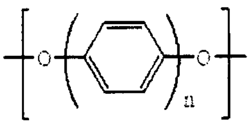 , 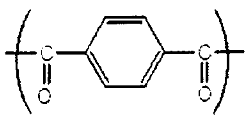 |

[Table 3]

| | |
|---|---|
| (9) | 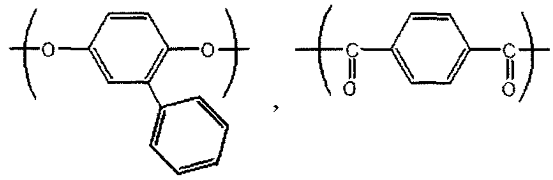 |
| (10) | 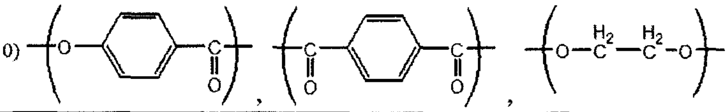 |
| (11) | 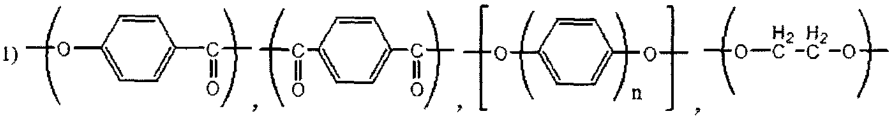 |
| (12) | 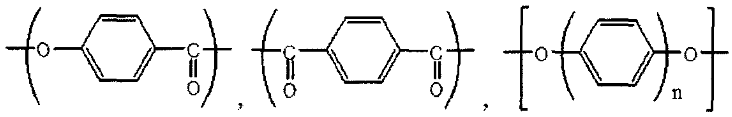 |
| (13) | 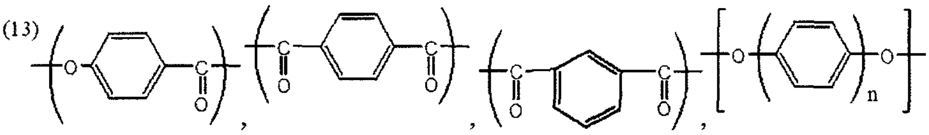 |
| (14) | 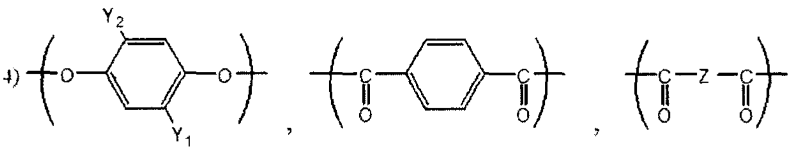 |
| (15) | 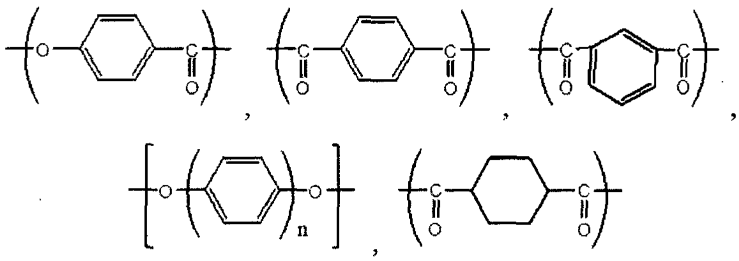 |

[Table 4]

| | |
|---|---|
| (16) | 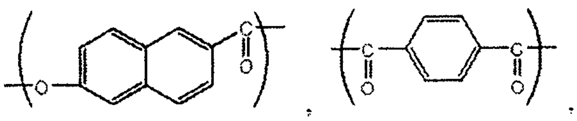 |
| | 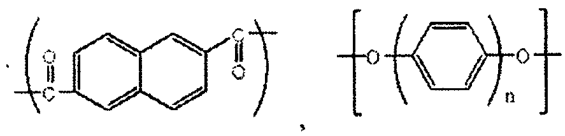 |

(continued)

| | |
|---|---|
| (17) | 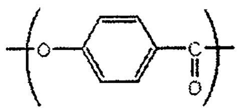 , 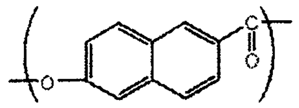 , |
| | 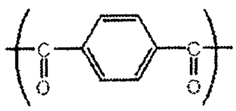 , 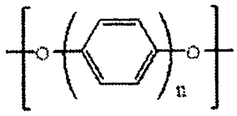 |
| (18) | 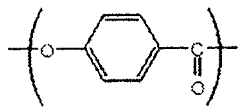 , 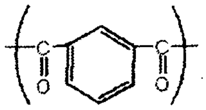 , 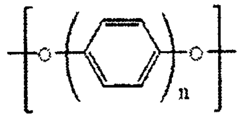 |

In the structural units shown in Tables 2, 3, and 4, n is an integer of 1 or 2, among each of the structural units, n = 1 and n = 2 may independently exist, or may exist in combination, and each of the $Y_1$ and $Y_2$ independently denotes a hydrogen atom, a halogen atom (for example, fluorine atom, chlorine atom, bromine atom, iodine atom, or the like), an alkyl group (for example, an alkyl group having 1 to 4 carbon atoms such as methyl group, ethyl group, isopropyl group, and t-butyl group, or the like), an alkoxy group (for example, methoxy group, ethoxy group, isopropoxy group, n-butoxy group, or the like), an aryl group (for example, phenyl group, naphthyl group, or the like), an aralkyl group [for example, benzyl group (phenylmethyl group), phenethyl group (phenylethyl group), or the like], an aryloxy group (for example, phenoxy group, or the like), an aralkyloxy group (for example, benzyloxy group, or the like), or the like. Among these, preferable $Y_1$ and $Y_2$ may include a hydrogen atom, a chlorine atom, a bromine atom, and a methyl group.

Z may include substitutional groups denoted by following formulae.

[Chem. 1]

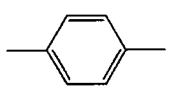 , 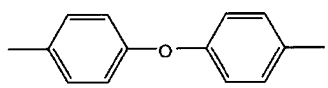 , 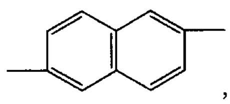 ,

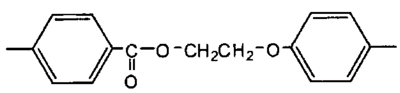 , 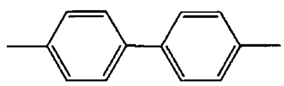

Among these, the thermotropic liquid crystalline wholly aromatic polyester used in the present invention preferably has a composition in which para-hydroxybenzoic acid and 6-hydroxy-2-naphthoic acid are main components or a composition in which para-hydroxybenzoic acid, 6-hydroxy-2-naphthoic acid, terephthalic acid, and biphenol are main components.

A nonwoven fabric including a thermotropic liquid crystalline aromatic polyester is preferably a melt-blown nonwoven fabric obtained by a melt-blown method. Any known method may be employed as the melt-blown method. For example, the melt-blown method is a method in which a molten thermotropic liquid crystalline aromatic polyester is discharged as a polymer melt from multiple nozzle holes arranged in a row, hot air is ejected at a high air velocity from gas ejection ports positioned adjacent to an orifice die to form fine fibers from the discharged polymer melt, and the fiber flow is then collected on a conveyor net or the like as a collector, to produce a nonwoven fabric. To impart heat resistance, heat treatment can be performed on the obtained nonwoven fabric. The heating temperature during this treatment is preferably a temperature of not lower than <melting point of thermotropic liquid crystalline wholly aromatic polyester - 40°C> and not higher than <melting point of thermotropic liquid crystalline wholly aromatic polyester + 20°C>, and it is preferable to perform the heat treatment for at least 3 hours. Examples of the gas used as a heating medium during the heat treatment include nitrogen, oxygen, argon, carbonic acid gas, a gas mixture thereof, and air. From the viewpoint of cost-saving, oxygen or air is more preferable. The heat treatment may be performed under tension or under no tension depending on the purpose.

Preferably, the melt viscosity of the thermotropic liquid crystalline aromatic polyester at 310°C is 20 Pa·s or less. Melt viscosity exceeding 20 Pa·s at 310°C is not preferred, since it becomes difficult to form ultra-fine fibers, oligomers may be formed during polymerization, and troubles may be caused during polymerization or granulation, or the like. On the other hand, if the melt viscosity is excessively low, it is also difficult to form fibers, and it is preferable that the thermotropic

liquid crystalline aromatic polyester has a melt viscosity of 5 Pa·s or more at 310°C. The melt viscosity of the thermotropic liquid crystalline aromatic polyester at 310°C refers to a value measured using, for example, a melt indexer (manufactured by Takara Kogyo Co., Ltd.: L244).

It should be noted that commonly used additives such as a colorant, an inorganic filler, an antioxidant, and an ultraviolet absorber, as well as a thermoplastic elastomer can be added to the thermotropic liquid crystalline aromatic polyester where necessary in the range that does not impair the function of the present invention (e.g., 10% by weight or less).

Among the fiber structure bodies, a nonwoven fabric structure is preferable from the viewpoint of avoiding complexity in the manufacturing process, maintaining strength, maintaining flexibility, and controlling contact points during formation of a metal coating. Exemplary type of the nonwoven fabric include a nonwoven fabric formed by a wet or dry method, a melt-blown nonwoven fabric, a spunlace nonwoven fabric, a thermal-bonded nonwoven fabric, and a nonwoven fabric formed by a needle punching method. Among these nonwoven fabrics, it is preferable to use fibers with small fiber diameters and long fiber lengths. Thus, a melt-blown nonwoven fabric is preferable. In particular, when a conductive nonwoven fabric including a melt-blown nonwoven fabric formed using a thermotropic liquid crystalline aromatic polyester and a metal coating formed on the nonwoven fabric is used as the conductive body, a current collector having the above-described small thickness can be obtained.

Specifically, the average fiber diameter of the fibers constituting the nonwoven fabric is 10 μm or less and is preferably, for example, in the range of 0.1 to 10 μm. This is because if the average fiber diameter is less than 0.1 μm, fluffs are likely to be generated and turn into a fiber aggregate, and if the average fiber diameter exceeds 10 μm, the fabric becomes coarse, resulting in insufficient conductivity when coated with metal. When a melt-blown nonwoven fabric is used as the nonwoven fabric, the average fiber diameter of the fibers constituting the melt-blown nonwoven fabric is preferably in the range of 0.5 to 8 μm, more preferably in the range of 0.5 to 7 μm, and further preferably in the range of 1 to 6 μm. It should be noted that the average fiber diameter of the fibers constituting the melt-blown nonwoven fabric according to the present invention refers to the average value of the fiber diameters of 100 randomly selected fibers measured in an image of the nonwoven fabric magnified and captured with a scanning electron microscope.

Where a nonwoven fabric is applied to the three-dimensional porous structure, it is preferable to use a melt-blown nonwoven fabric that includes such a thermotropic liquid crystalline aromatic polyester as a main component.

(Metal Coating)

When the conductive body of the present invention includes a non-conductive structure with a metal coating, in view of avoiding complexity in production process, maintaining strength, maintaining flexibility, and controlling contact points in the time of forming the metal coating, the metal coating is preferably applied on the fiber structure, preferably non-woven fabric, specifically on the surface of fibers constituting the fiber structure such as non-woven fabrics. The metal coating preferably contains any one of copper, nickel, gold, silver, and aluminum. These metals may be used individually, or two or more of these metals may be used in combination. Among these, a laminated coating containing any one of copper, nickel, gold, and aluminum is particularly preferable in terms of high conductivity, ease of forming a metal coating, or the like. Among these, copper, nickel, and aluminum are particularly preferable for a metal coating due to superior economic performance and high conductivity. Such a metal coating may be formed of a plurality of layers, and, for example, a first metal layer may be formed on a non-conductive structure, and further, a second metal layer may be formed on the first metal layer.

The surface resistance value of the conductive body of the present invention may vary depending on the type and thickness of the metal coating and is preferably in the range of $10^{-3}$ to $10^{0}$ Ω/sq. and more preferably in the range of $10^{-3}$ to $10^{-1}$ Ω/sq. from the viewpoint of ensuring sufficient conductivity.

Any conventionally known method such as electroplating, electroless plating, sputtering, and vacuum deposition can be used as a method for forming the metal coating. A method involving electroless plating is preferable so as to achieve high conductivity easily. There is no specific limitation to the electroless plating method, and any conventionally known method can be used as the electroless plating method. A typical method involves applying a catalyst to a non-conductive structure (e.g., the fiber surface of a nonwoven fabric) serving as a substrate, and then immersing the non-conductive structure in a chemical plating bath, in which a metal salt, a reducing agent, and a buffer agent are dissolved, to form a metal coating.

The thickness of the metal coating of the current collector (conductive body) of the present invention may be, for example, in the range of 0.05 to 10 μm or in the range of 0.1 to 5 μm and is more preferably 4 μm or less or 2 μm or less from the viewpoint of controlling the air permeability of the current collector while imparting the above-described surface resistance value. If the thickness of the metal coating is less than 0.05 μm, sufficient conductivity cannot be achieved. On the other hand, the thickness of the metal coating greater than 10 μm is not preferred since the flexibility and ductility of the current collector are impaired.

When forming a metal coating, for example, the metal coating may be formed on a non-conductive structure

having an air permeability of 0.2 to 800 $cc/cm^2/sec$ to form a current collector having an air permeability of 0.1 to 600 $cc/cm^2/sec$.

For example, the non-conductive structure (e.g., a non-conductive melt-blown nonwoven fabric) preferably has an air permeability of 0.2 to 800 $cc/cm^2/sec$. If the air permeability of the non-conductive structure exceeds 800 $cc/cm^2/sec$, it becomes more difficult to set the air permeability of the current collector to be in the above-described range, resulting in difficulty in achieving the desired reduction of resistance. Therefore, the air permeability of the non-conductive structure is preferably 800 $cc/cm^2/sec$ or less, more preferably 700 $cc/cm^2/sec$ or less, and further preferably 600 $cc/cm^2/sec$ or less. While the lower limit value of the air permeability of the non-conductive structure is not particularly limited to a specific value, the air permeability is preferably 0.2 $cc/cm^2/sec$ or more and more preferably 1 $cc/cm^2/sec$ or more from the viewpoint of ensuring mechanical strength and conductivity after coating with metal.

Furthermore, the non-conductive structure (e.g., a non-conductive melt-blown nonwoven fabric) preferably has a thickness in the range of 5 $\mu m$ or more and less than 100 $\mu m$. Where the thickness of the non-conductive structure is less than 5 $\mu m$, the non-conductive structure tends to become prone to breakage during the production of batteries and during the handling of batteries. Where the thickness of the non-conductive structure is 100 $\mu m$ or more, a demand for a thinner current collector cannot be met. Therefore, the thickness of the non-conductive structure is preferably in the range of 5 $\mu m$ or more and less than 100 $\mu m$, more preferably in the range of 7 to 30 $\mu m$, and further preferably in the range of 9 to 20 $\mu m$.

The above description of the current collector is also applicable to an electrode of a second embodiment.

[Active Material]

The electrode of the present invention includes a current collector and an active material and may include a conductive agent and/or a binder where necessary. The active material is capable of adsorbing and desorbing electrolyte ions and has a predetermined median diameter ($D_{50}$). The median diameter ($D_{50}$) denotes the particle diameter at which the cumulative volume from the fine particle side reaches 50% in a particle size distribution measured by a laser scattering method, and with this particle diameter as a boundary, particles having a particle diameter larger than this particle diameter and particles having a particle diameter smaller than this particle diameter exist in equal volumes.

While the preferred median diameter of the active material varies depending on the embodiment of the electrode, the median diameter may be 0.1 to 100 $\mu m$ from the viewpoint of suppressing side reactions during charging and discharging and ensuring both electrode formability and coatability of an active material layer (sometimes referred to as active material component layer).

The above explanation is also applicable to the electrode of the second embodiment.

[First Embodiment of Electrode]

In an embodiment of the electrode of the present invention, it is preferable that the average opening diameter of the current collector and the median diameter of the active material satisfy a predetermined relationship. Specifically, where the ratio B/A of average opening diameter of the current collector A ($\mu m$) and the median diameter of the active material B ($\mu m$) satisfies a relationship of the following formula (1), it is possible to improve the capacity retention rate of the obtained electrochemical device, possibly due to efficient insertion of the active material into the opening portions of the current collector.

$$0.10 \leq B/A \leq 2.00 \qquad (1)$$

Where B/A has small value, the average opening diameter of the current collector becomes sufficiently large with respect to the particle diameter of the active material, allowing an increase in the proportion of the active material entering the openings of the current collector and resulting in an increase in the contact area between the active material and the current collector. As a result, the resistance of the electrochemical device can be reduced, and the capacity retention rate can be improved. However, if B/A is excessively small, the active material becomes excessively packed in the current collector, so that the resistance to electrolyte movement is increased. As a result, the resistance of the electrochemical device is increased, and the capacity retention rate is decreased. Therefore, it is not preferable that B/A is smaller than the lower limit value of 0.10.

Where a current collector has large B/A value compared to the current collectors having the same opening diameter, it is possible to reduce the resistance of electrochemical device by suppressing increase of interface resistance and resistance to movement of electrolyte. However, if the value of B/A exceeds the upper limit of 2.00, the proportion of the active material entering the openings of the current collector decreases, and the contact area of the active material with the current collector decreases. As a result, it becomes difficult to improve the capacity retention rate of the electrochemical device.

The B/A value may be preferably 0.13 or more, more preferably 0.15 or more, and further preferably 0.20 or more. On the other hand, the B/A value may be preferably 1.96 or less, more preferably 1.70 or less, further preferably 1.50 or less, and particularly preferably 1.20 or less. For example, B/A may be 0.13 to 1.96, 0.15 to 1.70, 0.20 to 1.50, or 0.20 to 1.20.

The preferred range of the average opening diameter A varies as appropriate depending on the relationship with the median diameter of the active material. From the viewpoint of formability of a metal coating and the permeability for an electrolyte, the average opening diameter A may be, for example, 1 to 100 $\mu$m, more preferably 5 to 50 $\mu$m, and further preferably 10 to 20 $\mu$m.

In the present embodiment, the preferred range of the median diameter B of the active material varies as appropriate depending on the relationship with the average opening diameter of the current collector. From the viewpoint of suppressing side reactions during charging and discharging and ensuring both electrode formability and coatabiliyt of an active material layer, the median diameter B of the active material may be, for example, 0.1 to 100 $\mu$m, more preferably 1 to 50 $\mu$m, and further preferably 2 to 30 $\mu$m.

[Positive Electrode]

A positive electrode active material is not particularly limited to a specific one as long as the positive electrode active material has a predetermined average diameter in relation to the relationship with the current collector, and any known positive electrode active material can be used. Examples of a positive electrode active material capable of adsorbing and desorbing electrolyte ions include complex metal chalcogenide compounds such as layered oxide-based compounds (represented by $LiMO_2$ or $NaMO_2$, where M is a metal: e.g., $LiCoO_2$, $LiNiO_2$, $LiMnO_2$, $NaFeO_2$, $NaNiO_2$, $NaCoO_2$, $NaMnO_2$, and $NaVO_2$, or $LiNixCoyMnzO_2$ and $NaNixMnzO_2$ (where x, y, and z represent composition ratios)), olivine-based compounds (represented by $LiMPO_4$ or $NaMPO_4$, where M is a metal: e.g., $LiFePO_4$, $NaFePO_4$, or the like), and spinel-based compounds (represented by $LiM_2O_4$ or $NaM_2O_4$, where M is a metal: e.g., $LiMn_2O_4$, $NaMn_2O_4$, or the like), lithium-excess spinel compounds represented by $Li_{1+x}Mn_{2-x}O_4$ ($0 < x < 2$), metal oxides such as $Li[Ni_{0.17}Li_{0.2}Co_{0.07}Mn_{0.56}]O_2$ and $LiNi_{0.5}Mn_{1.5}O_4$, phosphate-containing compounds, polyanion-containing compounds, Prussian blue analogues, a compound and a polymer with sulfur, a compound and a polymer with a nitroxyl radical, a compound and a polymer with an oxy radical, a compound and a polymer with a nitrogen radical, and organic radicals such as a compound and a polymer with a fulvalene backbone. These positive electrode active materials may be used individually, or two or more of these positive electrode active materials may be used in combination. Among these, complex metal chalcogenide compounds are preferable.

In addition, in the case of producing a battery using electrostatic adsorption such as lithium-ion capacitors, examples of the positive electrode active material include carbon materials and inorganic materials having a large specific surface area, such as activated carbon, mesoporous carbon, and conductive ceramic materials including titanium dioxide with oxygen vacancies.

The positive electrode active material may be applied to the current collector as a positive electrode slurry to form a positive electrode active material layer. The content of the positive electrode active material in the positive electrode active material layer with respect to the total weight of the positive electrode active material layer (or the total weight of the solid content of the slurry) is preferably 80.0 to 99.9% by weight and more preferably 90 to 99.5% by weight.

Where necessary, the positive electrode active material layer may further contain a binder, and optionally, a conductive agent (conductive additive) in addition to the above-described positive electrode active material. The content of the binder in the positive electrode active material layer with respect to the total weight of the positive electrode active material layer may be 1% by weight to 5% by weight. In addition, when a conductive agent is further contained, 90% by weight to 98% by weight of the positive electrode active material, 1% by weight to 5% by weight of the binder, and 1% by weight to 5% by weight of the conductive agent may be used. When the positive electrode active material layer contains a binder, a conductive agent (conductive additive), or the like, in addition to the positive electrode active material, the solid component including these is sometimes referred to as positive electrode active material component, and the positive electrode active material layer is sometimes referred to as positive electrode active material component layer.

The above binder serves to cause particles of the positive electrode active material to adhere to each other well and cause the positive electrode active material to adhere to the current collector well. As the binder, a water-insoluble binder, a water-soluble binder, or a combination thereof may be used.

Examples of the water-insoluble binder include polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, polyamide imide, polyimide, styrene-butadiene rubber, acrylated styrene-butadiene rubber, copolymers of (meth)acrylic acid and (meth)acrylic acid alkyl esters, copolymers of $C_2$ to $C_8$ olefins and maleic acid, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, copolymers of propylene and $C_2$ to $C_8$ olefins, polyamide imide, polyimide, and combinations thereof.

Examples of the water-soluble binder include polyvinyl alcohol, copolymers of vinyl alcohol and ethylenically-unsaturated carboxylic acids and alkali metal modified products thereof, alkali metal modified products of copolymers of $C_2$ to $C_4$ alkenes and ethylenically-unsaturated carboxylic acids, alkali metal modified products of copolymers of $C_2$ to $C_4$ alkenes and maleic anhydride, and sodium poly(meth)acrylate.

A cellulose-based compound capable of imparting viscosity may be further used as a thickening agent in the positive electrode. As the cellulose-based compound, two or more of carboxymethyl cellulose, hydroxypropyl methyl cellulose, methyl cellulose, alkali metal salts thereof, or the like, may be used as a mixture. As the alkali metal, Na, K, or Li may be used. The amount of such a thickening agent may be 0.1 to 3 parts by weight with respect to 100 parts by weight of the active material.

The conductive agent is used to impart conductivity to the electrode, and any electron-conductive material can be used as long as the electron-conductive material does not cause chemical changes in the battery. For example, as such materials, carbon-based materials such as natural graphite, artificial graphite, carbon black, acetylene black, ketjen black, and carbon fibers, metal-based materials such as metal powders or metal fibers of copper, nickel, aluminum, silver, or the like, conductive polymers such as polyphenylene derivatives, or conductive materials containing mixtures thereof may be used.

For example, organic solvents can be used as solvents for the positive electrode slurry. Among the organic solvents, polar organic solvents that can dissolve the below-described binder are preferable.

Specifically, as organic solvents, acetonitrile, N-methyl pyrrolidone, acetyl pyridine, cyclopentanone, N,N-dimethyl acetamide, dimethylformamide, dimethyl sulfoxide, methylformamide, methyl ethyl ketone, furfural, ethylene diamine, or the like, can be used. Among these solvents, N-methyl pyrrolidone (NMP) is most preferable from the viewpoint of handleability, safety, ease of synthesis, or the like.

It should be noted that these organic solvents can be used individually, or two or more of these organic solvents may be used as a mixture.

The solvent can be used in such an amount that the concentration of the solid content in the positive electrode slurry is preferably 1 to 80% by weight, more preferably 5 to 70% by weight, and further preferably 10 to 60% by weight. The above described range is suitable since it is possible to disperse the positive electrode active material and the other components contained evenly by setting the concentration of the solid content to be in the above described range.

As for the method for preparing the positive electrode slurry, the positive electrode slurry can be prepared by mixing the above-described positive electrode active material and other components as needed in the solvent described above. There are no particular restrictions on the mixing method, and a general mixing device such as a disperser, mill, or kneader can be used. For example, stirring for a duration of 20 minutes or longer and 120 minutes or shorter is preferred.

There are no particular restrictions on the temperature during mixing, and mixing can be performed, for example, in the range of 0°C to 160°C and more preferably in the range of 20°C to 80°C. An excessively low temperature is not preferable since coating is made impossible due to high viscosity, and an excessively high temperature is not preferable from the viewpoint of safety and device operability. For example, high temperature conditions may cause evaporation of organic solvents, associated changes in viscosity, or the like.

The above positive electrode is made using the positive electrode slurry and includes a current collector and a positive electrode active material layer. The positive electrode active material layer can be formed by kneading the above active material and, where necessary, the conductive agent, the binder, or the like, and shaping the mixture into a sheet, which is then placed on the current collector and shaped as a positive electrode active material layer. Alternatively, the positive electrode slurry may be applied (coated) onto the current collector, dried, and formed into a positive electrode active material layer.

The method for applying the positive electrode slurry onto the current collector is not particularly limited to a specific method, and any known method can be used. Specifically, a doctor blade method, a dip method, a reverse roll method, a direct roll method, a gravure method, an extrusion method, a brush method, or the like, can be used as the application method. In this case, the positive electrode slurry may be applied only to one side of the current collector or may be applied to both sides of the current collector. The thickness of a membrane of the slurry applied on the current collector prior to drying can be set as appropriate in accordance with the thickness of a positive electrode composite layer obtained after drying.

The method for drying the positive electrode slurry on the current collector is not particularly limited to a specific method, and any known method can be used. Examples of the method include drying with warm air, hot air, or low-humidity air, vacuum drying, and drying by irradiation with infrared rays, electron beams, or the like. By thus drying the electrochemical element positive electrode slurry on the current collector, the positive electrode active material layer can be formed on the current collector, thereby obtaining a positive electrode including the current collector and the positive electrode active material layer.

Preferably, the drying step is conducted by drying the positive electrode slurry on the current collector at a drying temperature of 100°C or higher and 160°C or lower under atmospheric pressure or under reduced pressure for 1 hour to 12 hours.

It should be noted that, after the drying step, a pressurizing treatment may be performed on the positive electrode active material layer using a mold press, a roll press, or the like. This pressurizing treatment can improve the adhesion between the positive electrode active material layer and the current collector.

The thickness of the positive electrode active material varies depending on the production method and the desired battery performance, and is not limited to a specific thickness. The positive electrode active material is shaped with a thickness of normally 10 μm to 200 μm, more preferably 20 μm to 150 μm, and, in consideration of the electrical capacity of the battery and the combination with a negative electrode, 25 μm to 130 μm.

[Negative Electrode]

A negative electrode active material is not particularly limited to a specific one as long as the negative electrode active material has a predetermined average diameter which is related to the current collector, and any known negative electrode active material can be used. The negative electrode active material includes substances capable of adsorbing and desorbing electrolyte ions, alkali metals (Li, Na, K, Rb, Cs), alkaline earth metals (Be, Mg, Ca, Sr, Ba), alloys of alkali metals and alkaline earth metals, substances that can be doped into and dedoped from alkali metals and alkaline earth metals, and transition metal oxides.

The substances capable of adsorbing and desorbing electrolyte ions are preferably carbonaceous materials. For example, any commonly used carbon-based negative electrode active material can be used, and as a representative example, crystalline carbon, amorphous carbon, or a combination thereof may be used. Examples of the crystalline carbon include graphite such as natural or artificial graphite that is irregularly-shaped, planar, flake-shaped, spheroidal, or fibrous, and examples of the amorphous carbon include soft carbon or hard carbon, mesophase pitch carbide, and calcined coke. These substances may also be used in a state where lithium has been pre-adsorbed.

As the alloys of alkali metals and alkaline earth metals, alloys of alkali metals and alkaline earth metals with metals selected from the group consisting of Na, K, Rb, Cs, Fr, Be, Mg, Ca, Sr, Si, Sb, Pb, In, Zn, Ba, Ra, Ge, Al, and Sn may be used.

Examples of the substances that can be doped into and dedoped from alkali metals and alkaline earth metals include Si, $SiO_x$ ($0 < x < 2$), Si-Q alloys (where Q is an element selected from the group consisting of alkali metals, alkaline earth metals, Group 13 elements, Group 14 elements, Group 15 elements, Group 16 elements, transition metals, rare earth elements, and combinations thereof, and is not Si), Sn, $SnO_2$, and Sn-R (where R is an element selected from the group consisting of alkali metals, alkaline earth metals, Group 13 elements, Group 14 elements, Group 15 elements, Group 16 elements, transition metals, rare earth elements, and combinations thereof, and is not Sn). Furthermore, at least one of these substances and $SiO_2$ may be used as a mixture. As the above-described elements Q and R, an element(s) selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and any combination thereof may be used.

Examples of the transition metal oxides include vanadium oxide and lithium vanadium oxide.

In the case of producing an electric double-layer capacitor or a battery using electrostatic adsorption of electrolyte ions such as lithium-ion capacitors, examples of the positive electrode active material include carbon materials and inorganic materials having a large specific surface area, such as activated carbon, mesoporous carbon, and conductive ceramic materials including titanium dioxide with oxygen vacancies.

The negative electrode active material may be applied to the current collector as a negative electrode slurry to form a negative electrode active material layer. The content of the negative electrode active material in the negative electrode active material layer with respect to the total weight of the negative electrode active material layer (or the total weight of the solid content of the slurry) is preferably 80.0 to 99.9% by weight and more preferably 90 to 99.5% by weight.

In addition to the above-described negative electrode active material, the negative electrode active material layer may further contain a binder where necessary, and, optionally, a conductive agent (conductive additive). The content of the binder in the negative electrode active material layer with respect to the total weight of the negative electrode active material layer may be 1% by weight to 5% by weight. In addition, when a conductive agent is further contained, 90% by weight to 98% by weight of the negative electrode active material, 1% by weight to 5% by weight of the binder, and 1% by weight to 5% by weight of the conductive agent may be used.

The binder serves to cause particles of the negative electrode active material to adhere to each other well and cause the negative electrode active material to adhere to the current collector well. As the binder, a water-insoluble binder, a water-soluble binder, or a combination thereof may be used. As the water-insoluble binder and the water-soluble binder, those exemplified in the description of the positive electrode active material layer may be used.

Furthermore, a conductive agent may be used for the negative electrode active material layer, and as the conductive agent, those exemplified in the description of the positive electrode active material layer may be used. When the negative electrode active material layer contains a binder, a conductive agent (conductive additive), or the like, in addition to the negative electrode active material, the solid component including these substances is sometimes referred

to as negative electrode active material component, and the negative electrode active material layer is sometimes referred to as negative electrode active material component layer.

The negative electrode active material layer may be formed using a negative electrode slurry, and as solvents for the negative electrode slurry, those exemplified in the description of the positive electrode active material layer may be used.

In a similar manner as the above-described positive electrode, the negative electrode may be obtained by preparing a negative electrode slurry with a solvent and applying the negative electrode slurry onto the current collector. For example, the negative electrode can be prepared by kneading the above-described active material and, where necessary, the conductive agent, the binder, or the like, and shaping the mixture into a sheet, which is then placed on the current collector and shaped as a negative electrode active material layer. Alternatively, an ink-like slurry of the active material, the conductive agent, and the binder can be applied to the current collector, dried, and formed into a negative electrode active material layer.

The thickness of the negative electrode active material layer varies depending on the production method and the desired battery performance, and is not limited to a specific thickness. The negative electrode active material layer is shaped with a thickness of normally 10 μm to 200 μm, more preferably 20 μm to 150 μm, and, in consideration of the electrical capacity of the battery and the combination with the positive electrode, 25 μm to 130 μm.

As described below, in the present embodiment as well, at least part of the voids of the current collector is preferably filled with a component (active material component) including the active material (positive electrode active material, negative electrode active material) and, where necessary, a binder, a conductive agent, or the like. In the electrode of the present embodiment, since the average opening diameter A of the current collector and the median diameter ($D_{50}$) B of the active material satisfy a predetermined relationship, during the process of forming the active material layer described above, the slurry containing the active material can permeate into the voids of the current collector to fill the voids with the active material component.

The electrode includes a current collector and an electrode material layer disposed on at least one surface of the current collector. Here, a fact that the electrode material layer is disposed on the surface of the current collector means that the electrode material layer has a portion adjacent to the current collector, and includes a case where a portion of the electrode material layer enters the interior of the current collector.

## Second Embodiment

In the second embodiment of the present invention, as the configuration of the current collector, the definition of the median diameter of the active material, or the like, those described in the first embodiment can be applied. Therefore, in the following, first, the relationship between the porous structure of the current collector and the active material will be described for the electrode of the second embodiment.

### [Second Embodiment of Electrode]

In the embodiment, preferably, the electrode includes a current collector having a three-dimensional porous structure and an active material component packed in the current collector, and the filling rate of the active material component with respect to the current collector is controlled within a predetermined range. Here, the active material component refers to a solid component based on the active material, which includes the active material and a binder, a conductive additive, or the like, which are added where necessary. The filling rate of the active material component with respect to the current collector is preferably 37% or more and more preferably 45% or more. Here, in a cross-section of the current collector filled with the active material component, the ratio of the area occupied by the active material component to the area of the voids of the current collector is defined as the filling rate. By increasing the filling rate, the contact area between a solid-phase portion of the current collector (e.g., fibers having a metal coating formed thereon) and the active material can be increased, thereby improving the capacity retention rate of the electrochemical device. Hereinafter, the method for measuring the filling rate will be described with reference to Fig. 2 and Fig. 3.

Fig. 2 is a scanning electron microscope image (SEM image) obtained by capturing a cross-section in the thickness direction of the electrode. The highest and lowest positions where a projected portion of the current collector is present are identified in the image. Then, straight lines perpendicular to the thickness direction are drawn as L1 and L2 so as to include these positions respectively. The distance between these straight lines is defined as a thickness T of the current collector.

Next, the leftmost and rightmost positions where the projected portion of the collector is present are identified in the image. Then, straight lines parallel to the thickness direction are drawn as L3 and L4 so as to include these positions respectively. The distance between these straight lines is defined as an observation length (width of observation region) W of the current collector.

Thus, the observation area is defined as observation area ($\alpha$) = thickness $\times$ observation length of the current

collector.

Next, the projected areas of the active material and the current collector in the observation area are respectively calculated as (β) and (γ) using an image binarized using image analysis software ("Multi-file Analysis Application" created by KEYENCE CORPORATION) by setting the software such that black portions and other portions are distinguished from each other.

Fig. 3 shows a schematic diagram for illustrating portions of the current collector and the active material in the observation area in Fig. 2. In Fig. 3, the area occupied by an active material 2 is shown by dots, and the area occupied by a current collector 1 is shown by diagonal lines. In addition, the portions where neither the active material 2 nor the current collector 1 is present show voids 3. That is, the observation area (α) is formed by the total area of the current collector (solid-phase portion of the current collector) 1, the active material 2, and the voids 3. The area where the active material 2 is present corresponds to the projected area (β) of the active material, and the area where the current collector 1 is present corresponds to the projected area (γ) of the current collector.

By excluding the portion where the current collector 1 is present from the observation area (α), the area that can be filled with the active material in the observation area (α) can be recognized. That is, the value (α - γ) obtained by subtracting the projected area (γ) of the current collector from the observation area (α) corresponds to the area that can be filled with the active material in the observation area. In Fig. 3, this area is occupied by the active material 2 and the voids 3.

Where the ratio of the area (β) occupied by the active material 2 to the area (α - γ) that can be filled with the active material 2 is expressed by the formula: $\beta/(\alpha - \gamma) \times 100$, the proportion of the area (β) actually filled with the active material to the area (α - γ) that can be filled with the active material in the observation area can be defined in percentage as a filling rate (%).

The filling rate is 37% or more, is preferably 45% or more, and may be further preferably 50% or more and more preferably 60% or more. The upper limit of the filling rate is not particularly set and may be 100%, but is preferably 90% or less in order to ensure the electrolyte permeability. Therefore, the filling rate may be, for example, 45% or more and 90% or less.

The active material component may be present with a filling rate of 37% or more and preferably 45% or more in the interior of the current collector, and an active material component layer may be formed on the surface of the current collector where necessary.

The thickness of the entire electrode varies depending on the production method for the electrode and the desired battery performance, thus is not limited to a specific thickness, and may be, for example, 20 μm to 500 μm, preferably 30 μm to 400 μm, and more preferably 40 μm to 300 μm. The thickness of the active material component layer is a value measured by a method explained in the below-described Examples.

The thickness of the active material component layer varies depending on the production method for the electrode and the desired battery performance, thus is not limited to a specific thickness, and may be, for example, 5 μm to 200 μm, preferably 10 μm to 150 μm, and more preferably 20 μm to 130 μm. Here, the thickness of the active material component layer refers to its total thickness in the electrode. In the case where the active material component layer is provided only on one side, the thickness of the active material component layer refers to the thickness of one layer, and in the case where the active material component layer is provided on both sides, the thickness of the active material component layer refers to the total thickness of two layers. The thickness of the active material component layer is a value measured by a method explained in the below-described Examples.

The ratio of the thickness of the active material component layer to the thickness of the current collector can be reduced by increasing the filling rate of the active material component in the current collector. For example, the ratio defined as (thickness of active material component layer)/(thickness of current collector) may be 0.5 to 8, and preferably 0.6 to 7. The thickness of the active material component layer is a value measured by a method explained in the below-described Examples.

Density of the electrode is determined in accordance with the magnitude of the filling rate and the proportion of the active material component layer, thus is not limited to a specific density. For example, the density may be 1.00 to 2.00 g/cm$^3$ and preferably 1.05 to 1.80 g/cm$^3$. The density of the electrode is a value measured by a method explained in the below-described Examples.

[Positive Electrode]

A positive electrode active material is not particularly limited to a specific one as long as the positive electrode active material has a predetermined average diameter which is related to the current collector, and any known positive electrode active material can be used. Examples of a positive electrode active material capable of adsorbing and desorbing electrolyte ions include complex metal chalcogenide compounds such as layered oxide-based compounds (represented by $LiMO_2$ or $NaMO_2$, where M is a metal: e.g., $LiCoO_2$, $LiNiO_2$, $LiMnO_2$, $NaFeO_2$, $NaNiO_2$, $NaCoO_2$, $NaMnO_2$, and $NaVO_2$, or $LiNixCoyMnzO_2$ and $NaNixMnzO_2$ (where x, y, and z represent composition ratios)), olivine-based compounds (represented by $LiMPO_4$ or $NaMPO_4$, where M is a metal: e.g., $LiFePO_4$, $NaFePO_4$, or the like), and

spinel-based compounds (represented by $LiM_2O_4$ or $NaM_2O_4$, where M is a metal: e.g., $LiMn_2O_4$, $NaMn_2O_4$, or the like), lithium-excess spinel compounds represented by $Li_{1+x}Mn_{2-x}O_4$ ($0 < x < 2$), metal oxides such as $Li[Ni_{0.17}Li_{0.2}Co_{0.07}Mn_{0.56}]O_2$ and $LiNi_{0.5}Mn_{1.5}O_4$, phosphate-containing compounds, polyanion-containing compounds, Prussian blue analogues, a compound and a polymer with sulfur, a compound and a polymer with a nitroxyl radical, a compound and a polymer with an oxy radical, a compound and a polymer with a nitrogen radical, and organic radicals such as a compound and a polymer with a fulvalene backbone. These positive electrode active materials may be used individually, or two or more of these positive electrode active materials may be used in combination. Among these, complex metal chalcogenide compounds are preferable.

In addition, in the case of producing a battery using electrostatic adsorption such as lithium-ion capacitors, examples of the positive electrode active material include carbon materials and inorganic materials having a large specific surface area, such as activated carbon, mesoporous carbon, titanium dioxide with oxygen vacancies, and conductive ceramic materials.

The positive electrode active material may be applied to the current collector as a positive electrode slurry to form a positive electrode active material portion. The content of the positive electrode active material in the positive electrode active material portion with respect to the total weight of the positive electrode active material portion (or the total weight of the solid content of the slurry) is preferably 80.0 to 99.9% by weight and more preferably 90 to 99.5% by weight.

Where necessary, the positive electrode active material portion may further contain a binder, and, optionally, a conductive agent (conductive additive) in addition to the above-described positive electrode active material. The content of the binder in the positive electrode active material portion with respect to the total weight of the positive electrode active material portion may be 1% by weight to 5% by weight. In addition, when a conductive agent is further contained, 90% by weight to 98% by weight of the positive electrode active material, 1% by weight to 5% by weight of the binder, and 1% by weight to 5% by weight of the conductive agent may be used.

The above binder serves to cause particles of the positive electrode active material to adhere to each other well and cause the positive electrode active material to adhere to the current collector well. As the binder, a water-insoluble binder, a water-soluble binder, or a combination thereof may be used.

Examples of the water-insoluble binder include polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, polyamide imide, polyimide, styrene-butadiene rubber, acrylated styrene-butadiene rubber, copolymers of (meth)acrylic acid and (meth)acrylic acid alkyl esters, copolymers of $C_2$ to $C_8$ olefins and maleic acid, polyvinyl chloride, carboxylated polyvinyl chloride, polyvinyl fluoride, polymers containing ethylene oxide, polyvinyl pyrrolidone, polyurethane, polytetrafluoroethylene, polyvinylidene fluoride, polyethylene, polypropylene, copolymers of propylene and $C_2$ to $C_8$ olefins, polyamide imide, polyimide, and combinations thereof.

Examples of the water-soluble binder include polyvinyl alcohol, copolymers of vinyl alcohol and ethylenically-unsaturated carboxylic acids and alkali metal modified products thereof, alkali metal modified products of copolymers of $C_2$ to $C_4$ alkenes and ethylenically-unsaturated carboxylic acids, alkali metal modified products of copolymers of $C_2$ to $C_4$ alkenes and maleic anhydride, and sodium poly(meth)acrylate.

A cellulose-based compound capable of imparting viscosity may be further used as a thickening agent in the positive electrode binder,. As the cellulose-based compound, two or more of carboxymethyl cellulose, hydroxypropyl methyl cellulose, methyl cellulose, alkali metal salts thereof, or the like, may be used as a mixture. For example, styrene-butadiene rubber having carboxymethyl cellulose added thereto may be used as the binder. As the alkali metal, Na, K, or Li may be used. The amount of such a thickening agent may be 0.1 to 3 parts by weight with respect to 100 parts by weight of the active material.

The conductive agent is used to impart conductivity to the electrode, and any electron-conductive material can be used as long as the electron-conductive material does not cause chemical changes in the battery. For example, as such materials, carbon-based materials such as natural graphite, artificial graphite, carbon black, acetylene black, ketjen black, and carbon fibers, metal-based materials such as metal powders or metal fibers of copper, nickel, aluminum, silver, or the like, conductive polymers such as polyphenylene derivatives, or conductive materials containing mixtures thereof may be used.

As solvents for the positive electrode slurry, for example, water and various organic solvents (e.g., amide compounds, hydrocarbons, alcohols, ketones, esters, amine compounds, lactones, sulfoxides, sulfonic compounds, or the like) can be used. It should be noted that these solvents can be used individually, or two or more of these solvents may be used as a mixture.

As organic solvents, polar organic solvents capable of dissolving the binder are preferable, and, for example, as preferred polar organic solvents, acetonitrile, N-methyl pyrrolidone, acetyl pyridine, cyclopentanone, N,N-dimethyl acetamide, dimethylformamide, dimethyl sulfoxide, methylformamide, methyl ethyl ketone, furfural, ethylene diamine, or the like, can be used. Among these solvents, N-methyl pyrrolidone (NMP) is most preferable from the viewpoint of handleability, safety, ease of synthesis, or the like.

The solvent can be used in such an amount that the concentration of the solid content in the positive electrode

slurry is preferably 1 to 80% by weight, more preferably 5 to 70% by weight, and further preferably 10 to 60% by weight. By setting the concentration of the solid content to be in the above range, the positive electrode active material and the other components contained can be evenly dispersed, so that such a range is suitable.

A method for producing the electrode includes at least a step of filling a current collector having a three-dimensional porous structure with an active material component.

When filling the current collector with the active material component, it is possible to improve the filling rate of the active material component, for example, by (i) adjusting the viscosity of a slurry to be in an appropriate range, (ii) adjusting the surface tension of the slurry to be in an appropriate range, and/or (iii) using appropriate method for applying the slurry. The above-described methods (i) to (iii) may be performed individually, or two or more of the above-described methods (i) to (iii) may be performed in combination.

As for the method for preparing the positive electrode slurry, the positive electrode slurry can be prepared by mixing the above-described positive electrode active material and other components as needed in the solvent described above. There are no particular restrictions on the mixing method, and a general mixing device such as a disperser, mill, or kneader can be used. For example, stirring for a duration of 20 minutes or longer and 120 minutes or shorter is preferred.

There are no particular restrictions on the temperature during mixing, and mixing can be performed, for example, in the range of 0°C to 160°C and more preferably in the range of 20°C to 80°C. An excessively low temperature is not preferred since coating is made impossible due to high viscosity, and an excessively high temperature is not preferred from the viewpoint of safety and device operability since the evaporation of organic solvents and resultant changes in viscosity, or the like cannot be avoided.

(i) The viscosity of the slurry may be, for example, 10000 mPa·s or less, preferably 7000 mPa·s or less, and more preferably 5000 mPa·s or less. If the viscosity of the slurry is excessively high, it becomes difficult for the slurry containing the active material component to enter the interior of the current collector. While the lower limit of the viscosity of the slurry is not particularly limited to a specific value, the viscosity may be 50 mPa·s or more so as to fill the active material component efficiently.

(ii) It is preferable to adjust the surface tension of the slurry when water having high surface tension is used as a solvent. For example, water and a surface modifier for reducing the surface tension of water may be used in combination as a solvent. Examples of the surface modifier include lower alcohols (preferably $C_{1-3}$ alcohols) such as methanol and ethanol, various surfactants, and defoamers such as silicone-based oils. The ratio of the surface modifier to water can be appropriately selected depending on the type of surface modifier used in the solvent. For example, in the case of a lower alcohol, the amount of the lower alcohol may be 0.1 to 20 parts by weight, and preferably 0.5 to 15 parts by weight per 100 parts by weight of water. In the case of a defoamer, the amount of the defoamer may be 0.005 to 2 parts by weight, and preferably 0.01 to 1.5 parts by weight per 100 parts by weight of water The surface modifier may be used in a form of mixture with water, or may be used without being mixed with water.

(iii) The methods for applying the slurry are broadly categorized into coating and dipping (immersion). The method for applying the positive electrode slurry onto the current collector is not particularly limited to a specific method, and any known method can be used. Specifically, a doctor blade method, a dip method, a reverse roll method, a direct roll method, a gravure method, an extrusion method, a brush method, or the like, can be employed as the application method. In this case, the positive electrode slurry may be applied only to one side of the current collector or may be applied to both sides of the current collector. In the case of coating, the filling rate can be improved, for example, by adjusting the slurry by the above described methods (i) and/or (ii).

When the slurry is applied by dipping, discharge of air from the current collector is enhanced through promotion of defoaming by holding or pressurizing the current collector, or by vibrating the slurry by ultrasonic wave or the like while immersing the current collector in the slurry. By this process, it is possible to fill the slurry into the internal portion of the current collector effectively.

Then, the slurry may be dried where necessary. The drying method is not particularly limited to a specific method, and any known method may be used. Examples of the method include drying with warm air, hot air, or low-humidity air, vacuum drying, and drying by irradiation with infrared rays, electron beams, or the like.

Preferably, the drying step is conducted by drying the positive electrode slurry on the current collector at a temperature of 60°C or higher and 160°C or lower under atmospheric pressure or under reduced pressure for 1 hour to 12 hours.

It should be noted that, after the drying step, a pressurizing treatment may be performed on the positive electrode active material portion using a mold press, a roll press, or the like where necessary. This pressurizing treatment can improve the adhesion between the active material portion of the positive electrode and the current collector.

[Negative Electrode]

A negative electrode active material is not particularly limited to a specific one as long as the negative electrode active material has a predetermined average diameter related to the current collector, and any known negative electrode active material can be used. The negative electrode active material includes substances capable of adsorbing and desorbing electrolyte ions, alkali metals (Li, Na, K, Rb, Cs), alkaline earth metals (Be, Mg, Ca, Sr, Ba), alloys of alkali metals and alkaline earth metals, substances that can be doped into and dedoped from alkali metals and alkaline earth metals, and transition metal oxides.

The substances capable of adsorbing and desorbing electrolyte ions are preferably carbonaceous materials. For example, any commonly used carbon-based negative electrode active material can be used. As a representative example, crystalline carbon, amorphous carbon, or a combination thereof may be used. Examples of the crystalline carbon include graphite such as natural or artificial graphite that is irregularly-shaped, planar, flake-shaped, spheroidal, or fibrous. Examples of the amorphous carbon include soft carbon or hard carbon, mesophase pitch carbide, and calcined coke. These substances may also be used in a state where lithium has been pre-adsorbed.

As the alloys of alkali metals and alkaline earth metals, alloys of alkali metals and alkaline earth metals with metals selected from the group consisting of Na, K, Rb, Cs, Fr, Be, Mg, Ca, Sr, Si, Sb, Pb, In, Zn, Ba, Ra, Ge, Al, and Sn may be used.

Examples of the substances that can be doped into and dedoped from alkali metals and alkaline earth metals include Si, $SiO_x$ ($0 < x < 2$), Si-Q alloys (where Q is an element selected from the group consisting of alkali metals, alkaline earth metals, Group 13 elements, Group 14 elements, Group 15 elements, Group 16 elements, transition metals, rare earth elements, and combinations thereof, and is not Si), Sn, $SnO_2$, and Sn-R (where R is an element selected from the group consisting of alkali metals, alkaline earth metals, Group 13 elements, Group 14 elements, Group 15 elements, Group 16 elements, transition metals, rare earth elements, and combinations thereof, and is not Sn). Furthermore, at least one of these substances and $SiO_2$ may be used as a mixture. As the above-described elements Q and R, an element(s) selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and any combination thereof may be used.

Examples of the transition metal oxides include vanadium oxide and lithium vanadium oxide.

In the case of producing an electric double-layer capacitor or a battery using electrostatic adsorption of electrolyte ions such as lithium-ion capacitors, examples of the positive electrode active material include carbon materials and inorganic materials having a large specific surface area, such as activated carbon, mesoporous carbon, and conductive ceramic materials including titanium dioxide with oxygen vacancies.

When applying the negative electrode active material on the current collector, the application method exemplified in the description of the positive electrode active material portion may be employed. Therefore, the negative electrode active material may be applied to the current collector as a negative electrode slurry to form a negative electrode active material portion. The content of the negative electrode active material in the negative electrode active material portion with respect to the total weight of the negative electrode active material portion (or the total weight of the solid content of the slurry) is preferably 80.0 to 99.9% by weight and more preferably 90 to 99.5% by weight.

In addition to the above-described negative electrode active material, the negative electrode active material portion may further contain a binder where necessary, and, optionally, a conductive agent (conductive additive). The content of the binder in the negative electrode active material portion with respect to the total weight of the negative electrode active material portion may be 1% by weight to 5% by weight. In addition, when a conductive agent is further contained, 90% by weight to 98% by weight of the negative electrode active material, 1% by weight to 5% by weight of the binder, and 1% by weight to 5% by weight of the conductive agent may be used.

The binder serves to cause particles of the negative electrode active material to adhere to each other well and cause the negative electrode active material to adhere to the current collector well. As the binder, a water-insoluble binder, a water-soluble binder, or a combination thereof may be used. As the water-insoluble binder and the water-soluble binder, those exemplified in the explanation of the positive electrode active material portion may be used.

Furthermore, a conductive agent may be used for the negative electrode active material portion, and as the conductive agent, those exemplified in the explanation of the positive electrode active material portion may be used.

The negative electrode active material portion may be formed using a negative electrode slurry, and as solvents for the negative electrode slurry, those exemplified in the description of the positive electrode active material portion may be used.

In the negative electrode, the current collector having a three-dimensional porous structure is filled with the active material component, similar to the positive electrode described above.

As for the above-described relationship to be satisfied by the current collector and the active material in the electrode, the electrode of the present invention may satisfy either one of the conditions of the first embodiment and the second embodiment, but preferably, the electrode of the present invention may satisfy both of the conditions of the first

embodiment and the second embodiment.

That is, in the electrode of the first embodiment, the current collector may be filled with the active material component containing the active material and the filling rate (%) defined by the following formula (2) may be 37% or more.

$$\text{Filling rate (\%)} = \beta/(\alpha - \gamma) \times 100 \qquad (2),$$

where $\alpha$ denotes an observation area, the observation area is defined by thickness $\times$ observation length of the current collector, which are determined from an electron microscope image of a cross-section in the thickness direction of the electrode, and $\beta$ and $\gamma$ respectively represent the projected areas of the active material and the current collector calculated using image analysis software in the observation area.

Alternatively, in the electrode of the second embodiment, the average opening diameter A ($\mu$m) of the current collector and the median diameter ($D_{50}$) B ($\mu$m) of the active material may satisfy the relationship of the following formula (1).

$$0.10 \leq B/A \leq 2.00 \qquad (1)$$

[Electrochemical Device]

Fig. 4 is a schematic cross-sectional view showing an exemplary configuration of an electrochemical device 10 (non-aqueous electrolyte secondary battery). In the electrochemical device 10, a positive electrode 4 and a negative electrode 5 are disposed to face each other across a separator 6, the positive electrode 4 includes a positive electrode-side current collector 4a and a positive electrode active material component layer 4b, and the negative electrode 5 includes a negative electrode-side current collector 5a and a negative electrode active material component layer 5b. These may be further housed in a case (not shown).

The electrochemical device 10 of the present invention includes the electrode of the first embodiment or the second embodiment of the present invention. The electrode of the present invention may be used as both or one of the positive electrode 4 and the negative electrode 5. In the case where the electrode of the present invention is used only as one of the electrodes, any known or commonly used current collector (e.g., copper foil, nickel foil, aluminum foil, or the like) having electrical conductivity and electrochemical durability may be used as a current collector in the electrode for which the electrode of the present invention is not used.

For example, in the case where the electrochemical device 10 of the present invention is a non-aqueous electrolyte secondary battery, other materials constituting the non-aqueous electrolyte secondary battery such as the separator 6 and an electrolyte (not shown) are not particularly limited to specific materials, and various materials conventionally used or proposed for non-aqueous electrolyte secondary batteries can be used.

[Electrolyte]

The electrolyte may be any known electrolyte that can be used in an electrochemical device. When used as a non-aqueous electrolyte battery, it is preferable that the electrolyte contains at least a non-aqueous organic solvent and an alkali metal salt such as a lithium salt.

The non-aqueous organic solvent serves as a medium in which ions involved in electrochemical reactions in the battery can move.

As the non-aqueous organic solvent, a carbonate-based solvent, an ester-based solvent, an ether-based solvent, a ketone-based solvent, an alcohol-based solvent, or an aprotic solvent may be used. As the carbonate-based solvent, dimethyl carbonate (DMC), diethyl carbonate (DEC), dipropyl carbonate (DPC), methyl propyl carbonate (MPC), ethyl propyl carbonate (EPC), ethyl methyl carbonate (EMC), ethylene carbonate (EC), propylene carbonate (PC), butylene carbonate (BC), or the like, may be used. As the ester solvent, methyl acetate, ethyl acetate, n-propyl acetate, dimethyl acetate, methyl propionate, ethyl propionate, $\gamma$-butyrolactone, decanolide, valerolactone, mevalonolactone, caprolactone, or the like, may be used. As the ether solvent, dibutyl ether, tetraglyme, diglyme, dimethoxy ethane, 2-methyltetrahydrofuran, tetrahydrofuran, or the like, may be used. As the ketone solvent, cyclohexanone, or the like, may be used. As the alcohol solvent, ethyl alcohol, isopropyl alcohol, or the like, may be used. As the aprotic solvent, nitriles such as R-CN (wherein R is a linear, branched, or cyclic $C_2$ to $C_{20}$ hydrocarbon group and may contain an aromatic ring or an ether bond), amides such as dimethyl formamide, dioxolanes such as 1,3-dioxolane, sulfolanes, or the like, may be used.

The above-described non-aqueous organic solvents may be used individually, or two or more of the above non-aqueous organic solvents may be used as a mixture. The mixing ratio in the case where two or more of the above non-aqueous organic solvents are mixed and used may be adjusted as appropriate according to the intended battery performance.

In the case of the carbonate-based solvent, it is preferable to mix and use a cyclic carbonate and a linear carbonate. In this case, when the cyclic carbonate and the linear carbonate are mixed and used at a volume ratio of 1:1 to 1:9, the electrolyte can exhibit superior performance.

The above-described alkali metal salt (e.g., lithium salt) is a substance that is dissolved in the organic solvent and acts as a source of alkali metal ions (e.g., lithium ions) within the battery to enable the fundamental operation of an alkali metal ion secondary battery (e.g., lithium-ion secondary battery) and promote the movement of alkali metal ions between a positive electrode and a negative electrode. Representative examples of such an alkali metal salt include $LiPF_6$, $LiBF_4$, $LiSbF_6$, $LiAsF_6$, $LiCF_3SO_3$, $LiN(SO_2C_2F_5)_2$, $Li(CF_3SO_2)_2N$, $LiC_4F_9SO_3$, $LiClO_4$, $LiAlO_4$, $LiAlCl_4$, $LiN(C_xF_{2x+1}SO_2)(C_yF_{2y+1}SO_2)$ (where x and y are natural numbers), LiCl, LiI, $LiB(C_2O_4)_2$ (lithium bisoxalate borate (LiBOB), $NaClO_4$, $NaPF_6$, $NaBF_4$, $NaCF_3SO_3$, $NaN(CF_3SO_2)_2$, $NaN(FSO_2)_2$, $NaN(C_2F_5SO_2)_2$, $NaC(CF_3SO_2)_3$, $NaAsF_6$, $NaPF_6$, $NaB(C_6H_5)_4$, $CH_3SO_3Na$, $CF_3SO_3Na$, NaCl, and NaBr. These lithium salts may be used individually, or two or more of these lithium salts may be used as a mixture. Preferably, the alkali metal salt may be used at a concentration in the range of 0.1 to 2.0 M. If the concentration of the alkali metal salt is less than 0.1 M, the electrical conduction of the electrolyte tends to decrease, resulting in a decrease in electrolyte performance. If the concentration of the alkali metal salt exceeds 2.0 M, the viscosity of the electrolyte tends to increase, resulting in a decrease in the mobility of alkali metal ions.

The above electrolyte may further contain a vinylene carbonate-based compound or an ethylene carbonate-based compound as a battery-life improving agent in order to improve the battery life.

Representative examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, and fluoroethylene carbonate. In the case where such a battery-life improving agent is also used for the electrolyte, the amount thereof may be adjusted as appropriate.

[Separator]

In the electrochemical device of the present invention, a separator may be present between the positive electrode and the negative electrode. Such a separator may be any known or commonly used separator, and, for example, a polyethylene membrane, a polypropylene membrane, a polyvinylidene fluoride membrane, or a multilayer membrane of at least two layers of these may be used, or a mixed multilayer membrane such as a polyethylene/polypropylene two-layer separator, a polyethylene/polypropylene/polyethylene three-layer separator, or a polypropylene/polyethylene/polypropylene three-layer separator may be used.

EXAMPLES

Hereinafter, the present invention will be described in more detail by examples, but the present invention is not limited to these examples. It should be noted that properties of Examples and Comparative Examples in the present invention are measured by the following methods.

[Median Diameter $D_{50}$ ($\mu$m)]

The median diameters $D_{50}$ (particle size distributions) of a carbon precursor and a carbonaceous material were measured by a laser scattering method as follows. Samples of active materials of the below-described Examples and Comparative Examples were respectively added to an aqueous solution containing 0.3% by weight of a surfactant ("Polyoxyethylene (10) Octylphenyl Ether", manufactured by Wako Pure Chemical Industries, Ltd.). Each sample was dispersed in the aqueous solution by ultrasonication for at least 10 minutes using an ultrasonic cleaner. The particle size distribution was measured using this dispersion. The particle size distribution was measured using a particle size and particle size distribution analyzer ("MT3000II", manufactured by MicrotracBEL Corp.), where a solvent refractive index was set to 1.33 and particle transmittance set to absorption. The particle diameter at which the cumulative volume reached 50% was defined as the median particle diameter $D_{50}$.

[Average Opening Diameter ($\mu$m)]

A current collector was cut into a 2 × 2 cm piece in the plane direction thereof. The cut sample was sandwiched between upper and lower slide glasses and was placed on a black flat plate. Next, the sample placed on the plate was observed using a laser microscope for shape analysis (VK-X1000, manufactured by KEYENCE CORPORATION) at a magnification of 200×.

Next, an image obtained at a size of 0.75 × 1.00 mm was binarized using image analysis software ("Multi-file Analysis Application" created by KEYENCE CORPORATION) by setting a threshold value such that black portions originating from the flat plate and other portions were distinguished from each other. Each of black portions showing the

base plate was regarded as a through hole.

Through holes having an area of 2 $\mu m^2$ or more were selected from the observed image obtained by image processing, and the diameter of each through hole was calculated as an equivalent circle diameter which corresponds to the diameter of circle having the same area as the through hole. The average opening diameter of each sample was calculated as an average value of opening diameters of 500 to 5000 through holes selected from the observed image.

[Average Fiber Diameter (μm)]

At an arbitrary point in a sample piece (nonwoven fabric), an image was taken at a magnification of 1000× using a scanning electron microscope. Diameters of 100 fibers were measured from the image, and the average value of the measured diameters was used as the average fiber diameter of the sample piece.

[Basis Weight (g/$m^2$)]

In accordance with JIS L 1906, three pieces of specimens were taken from each of samples (nonwoven fabrics) prepared in Examples and Comparative Examples, where specimens each having a size of 20 cm in length and 20 cm in width were taken from an area having a width of 1 m. The basis weight of each sample was determined as a mass per unit area calculated from the average mass of three specimens divided by 400 $cm^2$, the area of a specimen.

[Thickness (μm)]

Thickness of the nonwoven fabrics or current collector before forming an electrode was determined in accordance with JIS L 1906 using the same three specimens prepared for the measurement of basis weight. Thickness of each specimen was measured at 5 locations using a digital thickness gauge (manufactured by Toyo Seiki Seisaku-sho, Ltd.: Type B1) with a diameter of 16 mm and a load of 20 gf/$cm^2$, and an average value of 15 points was calculated as the sample thickness.

[Air Permeability (cc/$cm^2$/sec)]

The same three specimens prepared for the measurement of basis weight were used for measurement of air permeability in accordance with 6.27.1 (Method A: Frazier Method) of JIS L 1096. An air permeability measurement instrument (FX3300, manufactured by TEXTEST in Switzerland) was used under the conditions of a measurement area of 38 $cm^2$ and a measurement pressure of 125 Pa, and the average value of the air permeabilities obtained from the three specimens was used as the air permeability of the nonwoven fabric or the current collector.

[Surface Resistance Value (Ω/sq.)]

The surface resistance value of the current collector was measured using a resistance value meter (MULTIMETER 3478A, manufactured by Hewlett Packard Company) by a four-terminal four-probe method in accordance with JIS K 7194.

[Slurry Viscosity]

As the viscosity of a slurry, using a B-type viscometer (DV2T, manufactured by EKO INSTRUMENTS, CO., LTD.) under the conditions of 25°C, spindle: CPA-52Z, and a rotation speed of 5 rpm, the viscosity was measured after 2 minutes from the start of measurement.

[Filling Rate]

An electrode was cut into an appropriate size, embedded in G2 epoxy resin, and cross-sectioned using a CP. The cross-section of the electrode was observed using a scanning electron microscope (SU8200, manufactured by Hitachi High-Technologies Corporation) at a voltage of 15 kV and a magnification of 2000×. Next, using an image analysis software ("PopImaging", created by Digital Being Kids), a current collector projection diagram was cut out from the obtained observation image so as to match the thickness of the current collector alone (Fig. 2).

First, in the obtained current collector projection diagram, the highest and lowest positions where a projected portion of the current collector was present were identified, and straight lines L1 and L2 perpendicular to the thickness direction and containing these positions were drawn. The distance between these straight lines was defined as the thickness of the current collector.

Next, the leftmost position and rightmost position of the projected portion of the current collector in the image were identified, and straight lines L3 and L4 parallel to the thickness direction were drawn so as to include these positions. The distance between these straight lines was defined as the observation length of the current collector.

Then, an observation area ($\alpha$) was calculated as thickness $\times$ observation length of the current collector.

The image was binarized by setting a threshold value such that white portions originating from the current collector and other portions were distinguished from each other in the observation area ($\alpha$), and the white portions were recognized as current collector portions. The area ($\gamma$) of the current collector portions was calculated from the observation image obtained through image processing. Next, the image was binarized by setting a threshold value such that portions where the active material was present and portions where no active material was present were distinguished from each other in the portions other than the current collector in the current collector projection diagram, and the area ($\beta$) of the active material-filled portions was calculated.

The value ($\alpha$ - $\gamma$) obtained by subtracting the area ($\gamma$) of the current collector portions from the observation area ($\alpha$) in the observation image obtained through image processing corresponds to the area that can be filled with the active material in the observation area.

Then, the ratio of the area ($\beta$) actually filled with the active material to the area ($\alpha$ - y) that can be filled with the active material in the observation area was calculated using the following formula, as a filling rate. In the same manner, the ratios were obtained from five points from the observation image, and average value of the five ratios was calculated as the filling rate for each sample.

$$\text{[Formula]} \quad \text{Filling rate (\%)} = \beta/(\alpha - \gamma) \times 100$$

[Thicknesses of Electrode and Active Material Component Layer]

Three sample pieces were used as electrodes of coin cells. For each sample piece, the thickness was measured at three locations in accordance with JIS L1906 using a digital pressure gauge (manufactured by Toyo Seiki Seisaku-sho, Ltd.: Type B1) with a diameter of 16 mm and a load of 20 gf/cm$^2$, and the average value of the nine measurements was used as the thickness of the electrode.

[Electrode Density]

The electrode density was defined as a value (g/cm$^3$) obtained by dividing the weight (g) of graphite mixed in a slurry in the time of producing a coin cell electrode by the volume (cm$^3$) of the produced electrode. It should be noted that the volume of the electrode was calculated using the thickness of the electrode and the diameter (14 mm) of the electrode.

[Powder Shedding]

The surface of the produced electrode was observed, and the presence or absence of the active material that had fallen off or been detached from the current collector was visually checked.

Good : No active material that had fallen off or been detached from the current collector was observed.
Poor : Active material that had fallen off or been detached from the current collector was observed.

[Example A1]

• Production of Current Collector

(1) A thermotropic liquid crystalline wholly aromatic polyester (VECTRA-L, manufactured by POLYPLASTICS CO., LTD.) composed of a copolymer of para-hydroxybenzoic acid and 6-hydroxy-2-naphthoic acid and having a melting point of 300°C and a melt viscosity of 15 Pa·s at 310°C was extruded using a twin-screw extruder. The extruded resin was fed to an apparatus for producing melt-blown nonwoven fabric, the apparatus having a nozzle hole size (diameter) of 0.15 mm, L/D = 30, and 1500 holes per 1 m width (intervals between the nozzle holes: 0.67 mm), and the resin was sprayed with conditions of a single-hole discharge rate of 0.10 g/min, a resin temperature of 330°C, and a hot air temperature of 330°C with 18 Nm$^3$ per meter of nozzle width. Thus, a nonwoven fabric having a basis weight of 11 g/m$^2$ was obtained. Then, the nonwoven fabric was heat treated at 300°C for 6 hours in air. Subsequently, the obtained nonwoven fabric was continuously treated using a pressure calendar at a linear pressure of 120 kg/cm by passing the

fabric between a metal roll heated to 110°C and an elastic roll (manufactured by YURI ROLL Co., Ltd.) made of a resin with a Shore D hardness of 86 at the surface thereof. Thus, a melt-blown nonwoven fabric having a basis weight of 11 $g/m^2$ as described above and an average fiber diameter of 5.1 μm was obtained.

(2) A palladium catalyst was provided on the fiber surface of the melt-blown nonwoven fabric obtained in the above-described process (1), and the fabric was immersed in an electroless plating copper solution containing copper sulfate and potassium sodium tartrate (Rochelle salt) and then washed with water to form a copper coating on the surface of the nonwoven fabric. Subsequently, the fabric was electroplated with copper by immersing the fabric in an electroplating nickel solution, washing the fabric with water, and drying the fabric. The thus obtained conductive nonwoven fabric had a copper coating further layered on the copper coating, an average opening diameter of 18.3 μm, a thickness of 46 μm, and an air permeability of 327 $cc/cm^2/sec$. This conductive nonwoven fabric was used as a current collector.

• Production of Electrode (Negative Electrode)

<Preparation of Negative Electrode Slurry>

94 parts by weight of artificial graphite having a median diameter of 21.0 μm, 6 parts by weight of polyvinylidene fluoride ("KF Polymer #1120", manufactured by KUREHA CORPORATION), and NMP (N-methylpyrrolidone) were put into a dedicated container and kneaded using a planetary agitator (ARE-250, manufactured by THINKY CORPORATION) to obtain a slurry.

<Production of Negative Electrode of Battery>

The obtained slurry was applied onto a current collector composed of the conductive nonwoven fabric using a bar coater (T101, manufactured by Matsuo Sangyo Co., Ltd.), left to stand for 15 minutes, and then primarily dried using a hot-air dryer (manufactured by Yamato Scientific Co., Ltd.) at 86°C for 30 minutes. Then the resultant material was rolled using a roll press machine (manufactured by Hohsen Corp.). Subsequently, the resultant material was punched as a battery electrode (diameter: 14 mm) and then subjected to secondary drying under the condition of a reduced pressure at 120°C for 3 hours to produce an electrode of a coin cell.

[Comparative Example A1]

A melt-blown nonwoven fabric having a basis weight of 4 $g/m^2$ and an average fiber diameter of 2.8 μm was produced in the same manner as in process (1) of Example A1. Using this nonwoven fabric, a conductive nonwoven fabric having an air permeability of 204 $cc/cm^2/sec$, a membrane thickness of 16 μm, and an average opening diameter of 10.1 μm was obtained by the same method as in process (2) of Example A1. A battery negative electrode was produced in the same manner as in Example A1, except that this conductive nonwoven fabric was used as the current collector.

[Comparative Example A2]

A battery negative electrode was produced in the same manner as in Example A1, except that a rolled copper foil (thickness: 10 μm) was used as a current collector of the negative electrode.

[Example A2]

A battery negative electrode was produced in the same manner as in Example A1, except that the melt-blown nonwoven fabric of Comparative Example A1 was used as the nonwoven fabric and 94 parts by weight of artificial graphite having a median diameter of 5.0 μm was used to prepare a slurry for the negative electrode.

<Production of Battery>

Each of the battery electrodes obtained in the above-described process was transferred to a glove box (manufactured by Miwa Manufacturing Co., Ltd.) under an argon gas atmosphere. A coin cell (2032 type) was produced using a metallic lithium foil (thickness: 0.2 mm, φ: 15 mm) as a positive electrode, a polypropylene-based separator (Celgard#2400, manufactured by Polyopening International, Inc.). A solution of lithium hexafluorophosphate ($LiPF_6$) in a mixed solvent obtained by adding vinylene carbonate (VC) to ethylene carbonate (EC), ethyl methyl carbonate (EMC), and dimethyl carbonate (DMC) (1M-$LiPF_6$, EC/EMC/DMC = 3/3/4 vol%, VC 1 wt%) was poured to the coin cell as an electrolyte.

<Charge-Discharge Characteristics Test>

The thus produced coin cell was subjected to a charge-discharge test using a commercially available charge-discharge tester (TOSCAT 3100, manufactured by TOYO SYSTEM CO., LTD.). The coin cell was placed in a thermostatic chamber at 25°C, and was charged at a constant current of 0.2C (about 0.50 mA/cm$^2$) with respect to the active material amount until 0 V was reached with respect to the lithium potential. The coin cell was further charged at a constant voltage of 0 V until a current of 0.0385 mA was reached with respect to the lithium potential. The capacity at this point was defined as a charge capacity (mAh/g). Next, the coin cell was discharged at a constant current of 0.2C (about 0.50 mA/cm$^2$) until 1.5 V was reached with respect to the lithium potential, and the capacity at this point was defined as a discharge capacity (mAh/g). In addition, discharge capacity × electrode density was defined as a volumetric capacity. The percentage of discharge capacity/charge capacity was defined as charge-discharge efficiency, which was used as an indicator of the utilization efficiency of lithium ions in the battery.

<Rate Characteristic Test>

The coin cell used in the charge-discharge test was placed in a thermostatic chamber at 25°C, and was charged at a constant current of 0.2C (about 0.50 mA/cm$^2$) with respect to the active material amount until 0 V was reached with respect to the lithium potential. The coin cell was further charged at a constant voltage of 0 V until a current of 0.0385 mA was reached with respect to the lithium potential. Next, the coin cell was discharged at a constant current of 0.5C (about 1.25 mA/cm$^2$) until 1.5 V was reached with respect to the lithium potential, and the capacity at the point where 0.4 V was reached was defined as a 0.5C discharge capacity (mAh/g).

Subsequently, the coin cell was recharged under the same conditions, discharged at a constant current of 3C (about 7.5 mA/cm$^2$) until 1.5 V was reached with respect to the lithium potential, and the capacity at the point where 0.4 V was reached was defined as a 3C discharge capacity (mAh/g). Then, a capacity retention rate was calculated using the following formula.

Capacity retention rate [%] = 3C discharge capacity/0.5C discharge capacity × 100

The evaluation results of the properties of the current collectors and the evaluation results of the electrodes and battery characteristics of each Example and each Comparative Example are shown in Table 5 to Table 8 below.

[Table 5]

| | Base material | | | Properties of current collector | | | |
|---|---|---|---|---|---|---|---|
| | Type | Basis weight | Average fiber diameter | Air permeability | Average opening diameter (A) | Membrane thickness before forming electrode | Surface resistance |
| | | g/m$^2$ | μm | cc/cm$^2$/s | μm | μm | Ω/sq. |
| Ex. A1 | MB non-woven fabric | 11 | 5.1 | 327 | 18.3 | 46 | 0.0148 |
| Ex. A2 | MB non-woven fabric | 4 | 2.8 | 204 | 10.1 | 16 | 0.0033 |
| Comp. Ex. A1 | MB non-woven fabric | 4 | 2.8 | 204 | 10.1 | 16 | 0.0033 |
| Comp. Ex. A2 | Rolled copper foil | - | - | - | - | 10 | 0.0002 |

[Table 6]

| | Active material | | | Slurry characteristics | | | |
|---|---|---|---|---|---|---|---|
| | Type | Median diameter $D_{50}$ (B) | B/A | Binder | Solvent | Surface modifier | Slurry viscosity |
| | | μm | | | | | (mPa·s) |
| Ex. A1 | Graphite | 21.0 | 1.15 | PVDF | NMP | None | About 3000 |
| Ex. A2 | Graphite | 5.0 | 0.50 | PVDF | NMP | None | About 3000 |
| Comp. Ex. A1 | Graphite | 21.0 | 2.08 | PVDF | NMP | None | About 3000 |
| Comp. Ex. A2 | Graphite | 21.0 | - | PVDF | NMP | None | About 3000 |

[Table 7]

| | Properties of electrode | | | | | | | |
|---|---|---|---|---|---|---|---|---|
| | Filling rate | Basis weight | Electrode thickness | Current collector thickness (X) | Active material component layer thickness (Y) | Y/X | Electrode density | Powder shedding |
| | % | g/m$^2$ | μm | μm | μm | | g/cm$^3$ | |
| Ex. A1 | 45 | 96 | 78.4 | 12 | 32 | 2.7 | 1.22 | Good |
| Ex. A2 | 53 | 95 | 77.2 | 12 | 61 | 5.1 | 1.23 | Good |
| Comp. Ex. A1 | 14 | 94 | 79.3 | 12 | 63.3 | 5.3 | 1.19 | Good |
| Comp. Ex. A2 | - | 94 | 78.3 | 10 | 68.3 | 6.8 | 1.21 | Good |

[Table 8]

| | Initial charge-discharge characteristics | | | | Rate characteristics | | |
|---|---|---|---|---|---|---|---|
| | Charge capacity | Discharge capacity | Volumetric capacity | ICE | Capacity (measured value) | | Capacity retention rate |
| | mAh/g | mAh/g | mAh/cc | % | 0.5C | 3C | 3C/0.5C |
| Ex. A1 | 388 | 356 | 436 | 92% | 338 | 207 | 61% |
| Ex. A2 | 397 | 345 | 423 | 87% | 325 | 283 | 87% |
| Comp. Ex. A1 | 378 | 347 | 412 | 92% | 329 | 115 | 35% |
| Comp. Ex. A2 | 386 | 357 | 430 | 92% | 336 | 111 | 33% |

As shown in Table 5 to Table 8, although a current collector having a three-dimensional porous structure is used in Comparative Example A1, the filling rate of the voids of the current collector is low, and the capacity retention rate (3C/0.5C) of the battery is low due to the large median diameter of the active material with respect to the average opening diameter of the current collector. The capacity retention rate shows a value comparative to the capacity retention rate (3C/0.5C) of the battery of Comparative Example A2 for which a rolled copper foil is used as the current collector.

On the other hand, in Example A1 and Example A2, since a current collector having a three-dimensional porous structure is used and the median diameter of the active material with respect to the average opening diameter of the current collector is controlled within a predetermined range, the capacity retention rate (3C/0.5C) of the battery can be significantly improved compared to those of Comparative Examples A1 and A2.

[Example A3]

• Preparation of Negative Electrode Active Material

<Preparation of Carbon Precursor>

Coconut shells were crushed and dry-distilled at 500°C to obtain coconut shell char (containing 98% by weight of particles having a particle diameter of 0.850 to 2.360 mm). 100 g of the coconut shell char was treated at 950°C for 80 minutes while supplying nitrogen gas containing 1% by volume of hydrogen chloride gas at a flow rate of 10 L/min. Then, only the supply of hydrogen chloride gas was stopped, and the coconut shell char was further heat treated at 950°C for an additional 30 minutes. The resultant material was then coarsely ground in a ball mill to an average particle diameter of 10 μm and ground in a compact jet mill ("Cojet System α-mkIII", manufactured by SEISHIN ENTERPRISE Co., Ltd.). Furthermore, the resultant material was classified using LABO CLASSIEL N-01 (manufactured by SEISHIN ENTERPRISE Co., Ltd.) to obtain a carbon precursor having a specific surface area of 400 $m^2$/g and a predetermined particle diameter.

<Preparation of Carbonaceous Material>

0.9 g of polystyrene (manufactured by Sekisui Kasei Co., Ltd., average particle diameter: 400 μm, residual carbon content: 1.2%) was mixed into 9.1 g of the carbon precursor. 10 g of the mixture was placed in a high-speed heating furnace manufactured by MOTOYAMA CO., LTD., heated to 1290°C under a nitrogen flow rate of 6 L/min, held at that temperature for 10 minutes, and then cooled naturally. After checking that the temperature in the furnace had decreased to 200°C or lower, the carbonaceous material was taken out from the furnace to obtain hard carbon (median diameter $D_{50}$: 1.3 μm) as a negative electrode active material.

A battery negative electrode and a cell were produced in the same manner as in Example A2, except that the obtained hard carbon was used as the negative electrode active material instead of artificial graphite.

[Examples A4, A5, and A6]

Battery negative electrodes and batteries were produced in the same manner as in Example A3, except that hard carbon having a median diameter shown in Table 10 was used as the negative electrode active material.

[Comparative Example A3]

A battery negative electrode and a battery were produced in the same manner as in Example A3, except that the melt-blown nonwoven fabric produced in Example A1 was used as the nonwoven fabric.

The evaluation results of the properties of the current collectors and the properties of the active materials and the slurries and the evaluation results of the electrodes and battery characteristics of each Example and each Comparative Example are shown in Table 9 to Table 12 below.

[Table 9]

| | Base material | | | Current collector physical properties | | | |
|---|---|---|---|---|---|---|---|
| | Type | Basis weight | Average fiber diameter | Air permeability | Average opening diameter (A) | Membrane thickness before forming electrode | Surface resistance |
| | | $g/m^2$ | μm | $cc/cm^2/s$ | μm | μm | Ω/sq. |
| Ex. A3 | MB non-woven fabric | 4 | 2.8 | 204 | 10.1 | 16 | 0.0033 |
| Ex. A4 | MB non-woven fabric | 4 | 2.8 | 204 | 10.1 | 16 | 0.0033 |
| Ex. A5 | MB non-woven fabric | 4 | 2.8 | 204 | 10.1 | 16 | 0.0033 |
| Ex. A6 | MB non-woven fabric | 4 | 2.8 | 204 | 10.1 | 16 | 0.0033 |

(continued)

| | Base material | | | Current collector physical properties | | | |
|---|---|---|---|---|---|---|---|
| | Type | Basis weight | Average fiber diameter | Air permeability | Average opening diameter (A) | Membrane thickness before forming electrode | Surface resistance |
| | | $g/m^2$ | μm | $cc/cm^2/s$ | μm | μm | Ω/sq. |
| Comp. Ex. A3 | MB non-woven fabric | 11 | 5.1 | 327 | 18.3 | 46 | 0.0148 |

[Table 10]

| | Active material | | | Slurry characteristics | | | |
|---|---|---|---|---|---|---|---|
| | Type | Median diameter $D_{50}$ (B) | B/A | Binder | Solvent | Surface modifier | Slurry viscosity |
| | | μm | | | | | (mPa·s) |
| Ex. A3 | Hard carbon | 1.3 | 0.13 | PVDF | NMP | None | About 3000 |
| Ex. A4 | Hard carbon | 2.9 | 0.29 | PVDF | NMP | None | About 3000 |
| Ex. A5 | Hard carbon | 5.0 | 0.50 | PVDF | NMP | None | About 3000 |
| Ex. A6 | Hard carbon | 19.8 | 1.96 | PVDF | NMP | None | About 3000 |
| Comp. Ex. A3 | Hard carbon | 1.3 | 0.07 | PVDF | NMP | None | About 3000 |

[Table 11]

| | Properties of electrode | | | | | | | |
|---|---|---|---|---|---|---|---|---|
| | Filling rate | Basis weight | Electrode thickness | Current collector thickness (X) | Active material component layer thickness (Y) | Y/X | Electrode density | Powder shedding |
| | % | $g/m^2$ | μm | μm | μm | | $g/cm^3$ | |
| Ex. A3 | 88 | 64 | 72.2 | 12 | 56 | 4.7 | 0.89 | Good |
| Ex. A4 | 72 | 62 | 73.0 | 12 | 57 | 4.8 | 0.85 | Good |
| Ex. A5 | 56 | 61 | 73.2 | 12 | 57 | 4.8 | 0.83 | Good |
| Ex. A6 | 48 | 59 | 73.5 | 12 | 58 | 4.8 | 0.81 | Good |
| Comp. Ex. A3 | 91 | 64 | 71.1 | 41 | 25.1 | 0.6 | 0.89 | Good |

[Table 12]

| | Initial charge-discharge characteristics | | | | Rate characteristics | | |
|---|---|---|---|---|---|---|---|
| | Charge capacity | Discharge capacity | Volumetric capacity | ICE | Capacity (measured value) | | Capacity retention rate |
| | mAh/g | mAh/g | mAh/cc | % | 0.5C | 3C | 3C/0.5C |
| Ex. A3 | 488 | 376 | 335 | 77% | 375 | 358 | 95% |
| Ex. A4 | 494 | 412 | 349 | 83% | 410 | 381 | 93% |
| Ex. A5 | 470 | 411 | 340 | 87% | 406 | 374 | 92% |
| Ex. A6 | 458 | 401 | 324 | 88% | 395 | 355 | 90% |

(continued)

| | Initial charge-discharge characteristics | | | | Rate characteristics | | |
|---|---|---|---|---|---|---|---|
| | Charge capacity | Discharge capacity | Volumetric capacity | ICE | Capacity (measured value) | | Capacity retention rate |
| | mAh/g | mAh/g | mAh/cc | % | 0.5C | 3C | 3C/0.5C |
| Comp. Ex. A3 | 488 | 364 | 326 | 75% | 355 | 309 | 87% |

As shown in Table 9 to Table 12, in Examples A3 to A6, regardless of the median diameter of the active material, it is possible to control the capacity retention rate (3C/0.5C) of the battery to be 90% or more since the median diameter of the active material with respect to the average opening diameter of the current collector is controlled within a predetermined range.

On the other hand, in Comparative Example A3, although a current collector having a three-dimensional porous structure is used, the capacity retention rate is lower than those of Examples A3 to A6, despite using the same active material as in Example A3 due to small median diameter of the active material with respect to the average opening diameter of the current collector.

[Example A7]

• Production of Current Collector (Al Plating)

(2) Both fiber surfaces of the melt-blown nonwoven fabric obtained in the process (1) in Example 1 were coated with Al by a vapor deposition method. A conductive nonwoven fabric having an Al coating, a thickness of 16 μm, and an air permeability of 204 cc/cm$^2$/sec was obtained.

• Production of Electrode (Positive Electrode)

<Preparation of Slurry for Positive Electrode >

Using a planetary agitator (ARE-250, manufactured by THINKY CORPORATION), a slurry for positive electrode was prepared by kneading raw materials while adding N-methylpyrrolidone as appropriate such that the viscosity of the slurry was adjusted to about 1500 mPa·s. 3 parts by weight of polyvinylidene fluoride (KF Polymer 1700, manufactured by KUREHA CORPORATION) was added as a binder, 93 parts by weight of $LiNi_{1/3}Co_{1/3}MN_{1/3}O2$ ("CELLSEED C-5H", manufactured by NIPPON CHEMICAL INDUSTRIAL CO., LTD.) having a median diameter of 10 μm was added as a positive electrode active material, and 2 parts by weight of Super-P (manufactured by TIMCAL) was added as a conductive agent. That is, the composition ratio of the active material, the conductive additive, and the binder in the slurry for positive electrode is, as a ratio of solid content, NCM powder : conductive additive : binder = 95:2:3 (mass ratio).

<Production of Battery Positive Electrode>

The obtained slurry was applied onto a current collector composed of the conductive nonwoven fabric using a bar coater (T101, manufactured by Matsuo Sangyo Co., Ltd.), left to stand for 5 minutes. Then the coated fabric was transferred onto a hot plate heated to 80°C, and primarily dried for 30 minutes. The resultant material was then rolled using a roll press machine (manufactured by Hohsen Corp.). Subsequently, the resultant material was punched as a battery electrode (diameter: 15 mm) and then subjected to secondary drying under the condition of a reduced pressure at 140°C for 3 hours to produce a coin cell electrode.

[Comparative Example A4]

A battery positive electrode was produced in the same manner as in Example A7, except that an aluminum foil (thickness: 20 μm) was used as the current collector of the positive electrode.

<Production of Battery>

The battery electrode obtained by the above-described process was transferred to a glove box (manufactured by Miwa Manufacturing Co., Ltd.) under an argon gas atmosphere. A coin cell (2032 type) was produced using a metal lithium

foil (thickness: 0.2 mm, φ: 15 mm) as a negative electrode, a nonwoven fabric of glass fiber (TGP-020A, manufactured by Nippon Sheet Glass Co., Ltd.) as a separator. A solution of lithium hexafluorophosphate ($LiPF_6$) in mixed solvent obtained by adding vinylene carbonate (VC) to ethylene carbonate (EC), ethyl methyl carbonate (EMC), and dimethyl carbonate (DMC) (1M-$LiPF_6$, EC/EMC/DMC = 1/1/1 vol%, VC 1 wt%) was used as an electrolyte and poured into the coin cell.

<Charge-Discharge Characteristics Test>

The produced coin cell was subjected to a charge-discharge test using a commercially available charge-discharge tester (TOSCAT 3100, manufactured by TOYO SYSTEM CO., LTD.). The coin cell was placed in a thermostatic chamber at 25°C, and was discharged at a constant current of 0.2C (about 0.70 mA/cm$^2$) until 4.2 V was reached with respect to the lithium potential, and the capacity at this point was defined as a charge capacity (mAh/g). Next, the coin cell was charged at a constant current of 0.2C (about 0.70 mA/cm$^2$) with respect to the active material weight until 3.0 V was reached with respect to the lithium potential, and the capacity at this point was defined as a discharge capacity (mAh/g). In addition, discharge capacity × electrode density was defined as a volumetric capacity. The percentage of discharge capacity/charge capacity was defined as charge-discharge efficiency, which was used as an indicator of the utilization efficiency of lithium ions in the battery.

<Discharge Rate Characteristic Test>

The coin cell used in the charge-discharge test was placed in a thermostatic chamber at 25°C, and was charged at a constant current of 0.2C (about 0.70 mA/cm$^2$) with respect to the active material weight until 4.2 V was reached with respect to the lithium potential. Next, the coin cell was discharged at a constant current of 0.5C (about 1.75 mA/cm$^2$) until 3.0 V was reached with respect to the lithium potential, and the capacity at the point where 3.0 V was reached was defined as a 0.5C discharge capacity (mAh/g).

Subsequently, the coin cell was recharged under the same conditions, discharged at a constant current of 3C (about 10.5 mA/cm$^2$) until 3.0 V was reached with respect to the lithium potential, and the capacity at the point where 3.0 V was reached was defined as a 3C discharge capacity (mAh/g). Then, a capacity retention rate was calculated using the following formula.

Capacity retention rate [%] = 3C discharge capacity/0.5C discharge capacity × 100

The evaluation results of the properties of the current collectors and the properties of the active materials and the slurries and the evaluation results of the electrodes and battery characteristics of Example A7 and Comparative Example A4 are shown in Table 13 to Table 16 below.

[Table 13]

| | Base material | | | Properties of current collector | | | |
|---|---|---|---|---|---|---|---|
| | Type | Basis weight | Average fiber diameter | Air permeability | Average opening diameter (A) | Membrane thickness before forming electrode | Surface resistance |
| | | g/m$^2$ | μm | cc/cm$^2$/s | μm | μm | Ω/sq. |
| Ex. A7 | MB non-woven fabric | 4 | 2.8 | 204 | 10.1 | 16 | 0.0033 |
| Comp. Ex. A4 | Aluminum foil | - | - | - | - | 20 | 0.0020 |

[Table 14]

| | Active material | | | Slurry characteristics | | | |
|---|---|---|---|---|---|---|---|
| | Type | Median diameter $D_{50}$ (B) | B/A | Binder | Solvent | Surface modifier | Slurry viscosity |
| | | μm | | | | | (mPa·s) |
| Ex. A7 | NCM | 10.8 | 1.07 | PVDF | NMP | None | About 1500 |

(continued)

| | Active material | | | Slurry characteristics | | | |
|---|---|---|---|---|---|---|---|
| | Type | Median diameter $D_{50}$ (B) | B/A | Binder | Solvent | Surface modifier | Slurry viscosity |
| | | μm | | | | | (mPa·s) |
| Comp. Ex. A4 | NCM | 10.8 | - | PVDF | NMP | None | About 1500 |

[Table 15]

| | Properties of electrode | | | | | | | |
|---|---|---|---|---|---|---|---|---|
| | Filling rate | Basis weight | Electrode thickness | Current collector thickness (X) | Active material component layer thickness (Y) | Y/X | Electrode density | Powder shedding |
| | % | g/m$^2$ | μm | μm | μm | | g/cm$^3$ | |
| Ex. A7 | 61 | 356 | 114 | 12 | 98 | 8.2 | 3.12 | Good |
| Comp. Ex. A4 | - | 324 | 116 | 20 | 106 | 5.3 | 2.79 | Good |

[Table 16]

| | Initial charge-discharge characteristics | | | | Rate characteristics | | |
|---|---|---|---|---|---|---|---|
| | Charge capacity | Discharge capacity | Volumetric capacity | ICE | Capacity (measured value) | | Capacity retention rate |
| | mAh/g | mAh/g | mAh/cc | % | 0.5C | 3C | 3C/0.5C |
| Ex. A7 | 163 | 141 | 45 | 86% | 139 | 63 | 45% |
| Comp. Ex. A4 | 161 | 139 | 50 | 86% | 137 | 49 | 36% |

As shown in Tables 13 to 16, in Example A7, the median diameter of the active material with respect to the average opening diameter of the current collector is controlled within a predetermined range, and the filling rate is also high. Therefore, the capacity retention rate is higher than that of Comparative Example A4 in which an aluminum foil is used as the current collector.

[Example B1]

• Production of Current Collector

(1) A thermotropic liquid crystalline wholly aromatic polyester (VECTRA-L, manufactured by POLYPLASTICS CO., LTD.) composed of a copolymer of para-hydroxybenzoic acid and 6-hydroxy-2-naphthoic acid and having a melting point of 300°C and a melt viscosity of 15 Pa·s at 310°C was extruded using a twin-screw extruder. The extruded resin was fed to an apparatus for producing melt-blown nonwoven fabric, the apparatus having a nozzle hole size (diameter) of 0.15 mm, L/D = 30, and 1500 holes per 1 m width (intervals between the nozzle holes: 0.67 mm), and the resin was sprayed with conditions of a single-hole discharge rate of 0.10 g/min, a resin temperature of 330°C, and a hot air temperature of 330°C with 18 Nm$^3$ per meter of nozzle width. Thus, a nonwoven fabric having a basis weight of 4 g/m$^2$ was obtained. Then, the nonwoven fabric was heat treated at 300°C for 6 hours in air. Subsequently, the obtained nonwoven fabric was continuously treated using a pressure calendar at a linear pressure of 120 kg/cm by passing the fabric between a metal roll heated to 110°C and an elastic roll (manufactured by YURI ROLL Co., Ltd.) made of a resin with a Shore D hardness of 86 at the surface thereof. Thus, a melt-blown nonwoven fabric having a basis weight of 4 g/m$^2$ as described above and an average fiber diameter of 2.8 μm was obtained.
(2) A palladium catalyst was provided on the fiber surface of the melt-blown nonwoven fabric obtained in the above-described process (1), and the fabric was immersed in an electroless plating copper solution containing copper sulfate

and potassium sodium tartrate (Rochelle salt) and then washed with water to form a copper coating on the surface of the nonwoven fabric. Subsequently, the fabric was electroplated with copper by immersing the fabric in an electroplating nickel solution, and then washing the fabric with water, and drying the fabric. Thus a conductive nonwoven fabric had a copper coating further layered on the copper coating and having a thickness of 16 μm, and an air permeability of 204 cc/cm$^2$/sec was obtained. This conductive nonwoven fabric was used as a current collector.

• Production of Electrode (Negative Electrode)

<Preparation of Negative Electrode Slurry>

96.5 parts by weight of artificial graphite having a median diameter of 5.0 μm, 2.0 parts by weight of styrene-butadiene rubber (SBR: "TRD2001", manufactured by JSR Corporation), 1.0 part by weight of carboxymethyl cellulose (CMC: "CELLOGEN BSH-6", manufactured by DKS Co., Ltd.), and 0.5 parts by weight of carbon black (CB: "Super P", manufactured by MTI Corporation) were kneaded in 106.3 parts by weight of ion-exchanged water. 2.1 parts by weight of ethanol ("Ethanol (99.5)", manufactured by FUJIFILM Wako Pure Chemical Corporation) was added as a surface modifier to the kneaded material, and the mixture was kneaded to obtain a slurry (proportion of ethanol to total slurry weight: 1 wt%) having a viscosity of 3000 mPa·s. The solvent in the obtained slurry is referred to as aqueous solvent (water containing 1 wt% of ethanol).

<Production of Battery negative electrode>

The obtained slurry was applied onto a current collector composed of the conductive nonwoven fabric using a bar coater (T101, manufactured by Matsuo Sangyo Co., Ltd.), left to stand for 15 minutes, and then primarily dried using a hot-air dryer (manufactured by Yamato Scientific Co., Ltd.) at 86°C for 30 minutes. The resultant material was then rolled using a roll press machine (manufactured by Hohsen Corp.). Subsequently, the resultant material was punched as a battery electrode (diameter: 14 mm) and then subjected to secondary drying under the condition of a reduced pressure at 120°C for 3 hours to produce a coin cell electrode.

[Example B2]

A battery negative electrode was produced in the same manner as in process (2) in Example B1, except that the amount of ion-exchanged water was set to 104.2 parts by weight, and the amount of ethanol ("Ethanol (99.5)", manufactured by FUJIFILM Wako Pure Chemical Corporation) was set to 4.2 parts by weight such that an aqueous solvent used as the slurry solvent was water containing 2 wt% of ethanol.

[Example B3]

A battery negative electrode was produced in the same manner as in Example B1, except that the amount of ion-exchanged water was set to 97.9 parts by weight and the amount of ethanol ("Ethanol (99.5)", manufactured by FUJIFILM Wako Pure Chemical Corporation) was set to 10.4 parts by weigh such that an aqueous solvent used as the slurry solvent was water containing 5 wt% of ethanol.

[Example B4]

A melt-blown nonwoven fabric having a basis weight of 11 g/m$^2$ and an average fiber diameter of 5.1 μm was produced in the same manner as in process (1) of Example B1, and a battery negative electrode was produced in the same manner as in Example B1, except that an aqueous solvent (water containing 5 wt% of ethanol) was used as the slurry solvent. A battery negative electrode was produced in the same manner as in Example B1, except that a melt-blown nonwoven fabric of Example B9 was used as the nonwoven fabric and 94 parts by weight of artificial graphite having a median diameter of 5.0 μm was used to prepare a negative electrode slurry.

[Example B5]

A battery negative electrode was produced in the same manner as in Example B1, except that the amount of ion-exchanged water was set to 108.1 parts by weight and the amount of a defoamer was set to 0.2 parts by weight such that an aqueous solvent used as the slurry solvent was water containing 0.1 wt% of the defoamer. As the defoamer, "NOPTECHS E-D54" manufactured by SAN NOPCO LIMITED was used.

[Example B6]

A battery negative electrode was produced in the same manner as in Example B1 except that the amount of ion-exchanged water was set to 108.3 parts by weight and kneading was performed without adding ethanol in the preparation process of negative electrode slurry, and the slurry was applied to the current collector obtained in the process of Example B1 by dipping. During impregnation through dipping, a defoaming treatment was performed using ultrasonic waves.

[Example B7]

A battery negative electrode was produced in the same manner as in Example B1, except that the slurry used for the negative electrode was prepared by adding 100 parts by weight of artificial graphite having a median diameter of 5.0 μm, and an aqueous solution containing 10 wt% polyvinyl alcohol (PVA 215 (manufactured by Kuraray Co., Ltd.): polymerization degree: 1700, saponification degree: 88) such that solid component of the solution amounts 3.15 parts by weight in the slurry, and the viscosity of the slurry was adjusted to about 10000 mPa·s by adding ion-exchanged water.

[Example B8]

A battery negative electrode was produced in the same manner as in Example B1, except that the slurry used for the negative electrode was prepared by adding 100 parts by weight of artificial graphite having a median diameter of 5.0 μm, and an aqueous solution containing 10 wt% polyvinyl alcohol (PVA 235 (manufactured by Kuraray Co., Ltd.): polymerization degree: 3500, saponification degree: 88) such that solid component of the solution amounts 3.12 parts by weight in the slurry, and the viscosity of the slurry was adjusted to about 3000 mPa·s by adding ion-exchanged water.

[Example B9]

A battery negative electrode was produced in the same manner as in Example B1, except that the slurry used for the negative electrode was prepared by adding 100 parts by weight of artificial graphite having a median diameter of 5.0 μm, and an aqueous solution containing 10 wt% polyvinyl alcohol (PVA 235 (manufactured by Kuraray Co., Ltd.): polymerization degree: 3500, saponification degree: 88) such that solid component of the solution amounts 3.12 parts by weight in the slurry, and the viscosity of the slurry was adjusted to about 10000 mPa·s by adding ion-exchanged water.

[Example B10]

A battery negative electrode was produced in the same manner as in Example B2, except that the viscosity of slurry was adjusted to about 10000 Pa·s.

[Example B11]

A battery negative electrode was produced in the same manner as in Example B1, except that the amount of ion-exchanged water was set to 108.3 parts by weight and kneading was performed without adding ethanol.

[Comparative Example B1]

A battery negative electrode was produced in the same manner as in Example B5, except that a rolled copper foil (thickness: 10 μm) was used as the negative electrode current collector.

[Comparative Example B2]

A slurry was prepared in the same manner as in Example B9, except that the particle diameter of artificial graphite was 21 μm. The slurry viscosity at this time was about 3000 Pa. A battery negative electrode was produced in the same manner as in Example B1 using this slurry.

<Production of Battery>

Each of the battery electrode obtained in the above described processes was transferred to a glove box (manufactured by Miwa Manufacturing Co., Ltd.) under an argon gas atmosphere. A coin cell (2032 type) was produced by using a metal lithium foil (thickness: 0.2 mm, φ: 15 mm) as a positive electrode, and a polypropylene-based separator (Celgard#2400, manufactured by Polypore International, Inc.), and pouring a solution of lithium hexafluorophosphate

($LiPF_6$) in mixed solvent obtained by adding vinylene carbonate (VC) to ethylene carbonate (EC), ethyl methyl carbonate (EMC), and dimethyl carbonate (DMC) (1M-$LiPF_6$, EC/EMC/DMC = 3/3/4 vol%, VC 1 wt%) as an electrolyte.

<Charge-Discharge Characteristics Test>

The produced coin cell was subjected to a charge-discharge test using a commercially available charge-discharge tester (TOSCAT 3100, manufactured by TOYO SYSTEM CO., LTD.). The coin cell was placed in a thermostatic chamber at 25°C, and was charged at a constant current of 0.2C (about 0.50 mA/$cm^2$) with respect to the active material weight until 0 V was reached with respect to the lithium potential. The coin cell was further charged at a constant voltage of 0 V until a current of 0.0385 mA was reached with respect to the lithium potential. The capacity at this point was defined as a charge capacity (mAh/g). Next, discharging was performed at a constant current of 0.2C (about 0.50 mA/$cm^2$) until 1.5 V was reached with respect to the lithium potential, and the capacity at this point was defined as a discharge capacity (mAh/g). In addition, discharge capacity × electrode density was defined as a volumetric capacity. The percentage of discharge capacity/charge capacity was defined as charge-discharge efficiency, which was used as an indicator of the utilization efficiency of lithium ions in the battery.

<Discharge Rate Characteristic Test>

The coin cell used in the charge-discharge test was placed in a thermostatic chamber at 25°C, and was charged at a constant current of 0.2C (about 0.50 mA/$cm^2$) with respect to the active material weight until 0 V was reached with respect to the lithium potential. The coin cell was further charged at a constant voltage of 0 V until a current of 0.0385 mA was reached with respect to the lithium potential. Next, discharging was performed at a constant current of 0.5C (about 1.25 mA/$cm^2$) until 1.5 V was reached with respect to the lithium potential, and the capacity at the point where 0.4 V was reached was defined as a 0.5C discharge capacity (mAh/g).

Subsequently, the coin cell was recharged under the same conditions, and discharged at a constant current of 3C (about 7.5 mA/$cm^2$) until 1.5 V was reached with respect to the lithium potential, and the capacity at the point where 0.4 V was reached was defined as a 3C discharge capacity (mAh/g). Then, a capacity retention rate was calculated using the following formula.

Capacity retention rate [%] = 3C discharge capacity/0.5C discharge capacity × 100

The evaluation results of the properties of the current collectors and the evaluation results of the electrodes and battery characteristics of each Example and each Comparative Example are shown in Table 17 to Table 20 below.

[Table 17]

| | Base material | | | Properties of current collector | | | |
|---|---|---|---|---|---|---|---|
| | Type | Basis weight | Average fiber diameter | Air permeability | Average opening diameter (A) | Membrane thickness before forming electrode | Surface resistance |
| | | $g/m^2$ | μm | $cc/cm^2/s$ | μm | μm | Ω/sq. |
| Ex. B1 | MB non-woven fabric | 4 | 2.8 | 204 | 10.1 | 16 | 0.0033 |
| Ex. B2 | MB non-woven fabric | 4 | 2.8 | 204 | 10.1 | 16 | 0.0033 |
| Ex. B3 | MB non-woven fabric | 4 | 2.8 | 204 | 10.1 | 16 | 0.0033 |
| Ex. B4 | MB non-woven fabric | 11 | 5.1 | 327 | 18.3 | 46 | 0.0148 |

(continued)

| | Base material | | | Properties of current collector | | | |
|---|---|---|---|---|---|---|---|
| | Type | Basis weight | Average fiber diameter | Air permeability | Average opening diameter (A) | Membrane thickness before forming electrode | Surface resistance |
| | | $g/m^2$ | μm | $cc/cm^2/s$ | μm | μm | Ω/sq. |
| Ex. B5 | MB non-woven fabric | 4 | 2.8 | 204 | 10.1 | 16 | 0.0033 |
| Ex. B6 | MB non-woven fabric | 4 | 2.8 | 204 | 10.1 | 16 | 0.0033 |
| Ex. B7 | MB non-woven fabric | 4 | 2.8 | 204 | 10.1 | 16 | 0.0033 |
| Ex. B8 | MB non-woven fabric | 4 | 2.8 | 204 | 10.1 | 16 | 0.0033 |
| Ex. B9 | MB non-woven fabric | 4 | 2.8 | 204 | 10.1 | 16 | 0.0033 |
| Ex. B10 | MB non-woven fabric | 4 | 2.8 | 204 | 10.1 | 16 | 0.0033 |
| Ex. B11 | MB non-woven fabric | 4 | 2.8 | 204 | 10.1 | 16 | 0.0033 |
| Comp. Ex. B1 | Rolled copper foil | - | - | - | - | 20 | 0.0002 |
| Comp. Ex. B2 | MB non-woven fabric | 4 | 2.8 | 204 | 10.1 | 16 | 0.0033 |

[Table 18]

| | Active material | | | Slurry characteristics | | | |
|---|---|---|---|---|---|---|---|
| | Type | Median diameter $D_{50}$ (B) | B/A | Binder | Solvent | Surface modifier | Slurry viscosity |
| | | μm | | | | | (mPa·s) |
| Ex. B1 | Graphite | 5.0 | 0.50 | SBR/CMC | Water | EtOH 1 wt% | About 3000 |
| Ex. B2 | Graphite | 5.0 | 0.50 | SBR/CMC | Water | EtOH 2 wt% | About 3000 |
| Ex. B3 | Graphite | 5.0 | 0.50 | SBR/CMC | Water | EtOH 5 wt% | About 3000 |
| Ex. B4 | Graphite | 5.0 | 0.27 | SBR/CMC | Water | EtOH 5 wt% | About 3000 |
| Ex. B5 | Graphite | 5.0 | 0.50 | SBR/CMC | Water | Defoamer 0.1 wt% | About 3000 |
| Ex. B6 | Graphite | 5.0 | 0.50 | SBR/CMC | Water | None | About 3000 |
| Ex. B7 | Graphite | 5.0 | 0.50 | PVA | Water | None | About 3000 |
| Ex. B8 | Graphite | 5.0 | 0.50 | PVA | Water | None | About 3000 |

(continued)

| | Active material | | | Slurry characteristics | | | |
|---|---|---|---|---|---|---|---|
| | Type | Median diameter $D_{50}$ (B) | B/A | Binder | Solvent | Surface modifier | Slurry viscosity |
| | | µm | | | | | (mPa·s) |
| Ex. B9 | Graphite | 5.0 | 0.50 | PVA | Water | None | About 10000 |
| Ex. B10 | Graphite | 5.0 | 0.50 | SBR/CMC | Water | EtOH 2 wt% | About 10000 |
| Ex. B11 | Graphite | 5.0 | 0.50 | SBR/CMC | Water | None | About 3000 |
| Comp. Ex. B1 | Graphite | 5.0 | - | SBR/CMC | Water | Defoamer 0.1 wt% | About 3000 |
| Comp. Ex. B2 | Graphite | 21 | 2.08 | PVA | Water | None | About 3000 |

[Table 19]

| | Electrode physical properties | | | | | | | |
|---|---|---|---|---|---|---|---|---|
| | Filling rate | Basis weight | Electrode thickness | Current collector thickness (X) | Active material component layer thickness (Y) | Y/X | Electrode density | Powder shedding |
| | % | g/m$^2$ | µm | µm | µm | | g/cm$^3$ | |
| Ex. B1 | 54 | 79 | 74 | 12 | 58 | 4.8 | 1.06 | Good |
| Ex. B2 | 76 | 86 | 78 | 12 | 62 | 5.2 | 1.10 | Good |
| Ex. B3 | 81 | 88 | 80 | 12 | 64 | 5.3 | 1.11 | Good |
| Ex. B4 | 85 | 105 | 89 | 41 | 43 | 1.0 | 1.18 | Good |
| Ex. B5 | 87 | 106 | 89 | 12 | 73 | 6.1 | 1.19 | Good |
| Ex. B6 | 87 | 108 | 90 | 12 | 74 | 6.2 | 1.20 | Good |
| Ex. B7 | 81 | 81 | 73 | 12 | 57 | 4.8 | 1.11 | Poor |
| Ex. B8 | 79 | 78 | 72 | 12 | 56 | 4.7 | 1.08 | Poor |
| Ex. B9 | 38 | 67 | 71 | 12 | 55 | 4.6 | 0.94 | Good |
| Ex. B10 | 39 | 94 | 96 | 12 | 80 | 6.7 | 0.98 | Good |
| Ex. B11 | 41 | 56 | 56 | 12 | 40 | 3.3 | 0.99 | Good |
| Comp. Ex. B1 | - | 106 | 101 | 20 | 81 | 4.0 | 1.05 | Good |
| Comp. Ex. B2 | 35 | 93 | 81 | 12 | 65 | 5.4 | 1.15 | Good |

[Table 20]

| | Initial charge-discharge characteristics | | | | Rate characteristics | | |
|---|---|---|---|---|---|---|---|
| | Charge capacity | Discharge capacity | Volumetric capacity | ICE | Capacity (measured value) | | Capacity retention rate |
| | mAh/g | mAh/g | mAh/cc | % | 0.5C | 3C | 3C/0.5C |
| Ex. B1 | 367 | 340 | 361 | 93% | 322 | 283 | 88% |
| Ex. B2 | 377 | 341 | 377 | 91% | 325 | 295 | 91% |
| Ex. B3 | 369 | 344 | 381 | 93% | 329 | 298 | 91% |
| Ex. B4 | 365 | 338 | 400 | 93% | 327 | 284 | 87% |
| Ex. B5 | 368 | 340 | 404 | 92% | 328 | 301 | 92% |

(continued)

| | Initial charge-discharge characteristics | | | | Rate characteristics | | |
|---|---|---|---|---|---|---|---|
| | Charge capacity | Discharge capacity | Volumetric capacity | ICE | Capacity (measured value) | | Capacity retention rate |
| | mAh/g | mAh/g | mAh/cc | % | 0.5C | 3C | 3C/0.5C |
| Ex. B6 | 365 | 340 | 408 | 93% | 330 | 303 | 92% |
| Ex. B7 | 333 | 307 | 340 | 92% | 302 | 254 | 84% |
| Ex. B8 | 337 | 310 | 336 | 92% | 305 | 250 | 82% |
| Ex. B9 | 366 | 333 | 314 | 91% | 324 | 252 | 78% |
| Ex. B10 | 368 | 334 | 327 | 91% | 322 | 243 | 75% |
| Ex. B11 | 365 | 334 | 331 | 92% | 319 | 251 | 79% |
| Comp. Ex. B1 | 347 | 321 | 339 | 93% | 314 | 178 | 57% |
| Comp. Ex. B2 | 351 | 334 | 383 | 95% | 325 | 112 | 34% |

In Comparative Example B1, since a copper foil was used as the current collector, the volumetric capacity in the initial charge-discharge characteristics and the capacity retention rate in the discharge rate characteristics could not be improved.

In Comparative Example B2 which corresponds to Example 3 in Patent Document 1, the median diameter $D_{50}$ of the active material is larger than the average opening diameter of the current collector. As a result, the filling rate of the current collector was 35%, and the volumetric capacity in the initial charge-discharge characteristics and the capacity retention rate in the discharge rate characteristics could not be improved.

In contrast, as shown in Table 17 to Table 20, in Example B1 to Example B11, the charge capacity could be significantly improved by reducing the particle diameter of graphite as the active material.

Specifically, while the capacity retention rate in Examples B9 to B11 in which the filling rate of the current collector is less than 45% remains below 80%, the capacity retention rate in Examples B1 to B8 in which the filling rate is 45% or more shows a higher value exceeding 80%.

In Example B9, not only the slurry viscosity was high, but the surface tension of the slurry was also high. Therefore, the filling rate into the current collector could not be increased, and the volumetric capacity in the initial charge-discharge characteristics and the capacity retention rate in the discharge rate characteristics could not be improved compared to Examples B1 to B9.

In Example B10, although the surface tension was decreased by an aqueous solvent mixed with ethanol, since the slurry viscosity was high, the filling rate into the current collector could not be increased, and the volumetric capacity in the initial charge-discharge characteristics and the capacity retention rate in the discharge rate characteristics could not be improved compared to Examples B1 to B9.

In Example B11, although the slurry viscosity was reduced, since the surface tension of the slurry was high, the filling rate into the current collector could not be increased, and the volumetric capacity in the initial charge-discharge characteristics and the capacity retention rate in the discharge rate characteristics could not be improved compared to Examples B1 to B9.

In contrast, in Examples B1 to B5, since the slurry viscosity and the surface tension of the slurry were adjusted, the filling rate of the current collector could be made to be 45% or more. As a result, the volumetric capacity in the initial charge-discharge characteristics could be further improved, and the capacity retention rate in the discharge rate characteristics could be improved.

In Example B6, even when the same slurry as in Example B10 was used, the filling rate could be improved compared to Example B10 by dip-coating the slurry while applying ultrasonic wave. As a result, the volumetric capacity in the initial charge-discharge characteristics could be improved, and the capacity retention rate in the discharge rate characteristics could be improved.

Furthermore, in Example B7, by reducing the molecular weight of the binder component, and in Example B8, by reducing the concentration of the binder component in the slurry, the filling rate could be improved compared to Example B11 even in a state where the surface tension of the slurry was high. As a result, the volumetric capacity in the initial charge-discharge characteristics could be improved, and the capacity retention rate in the discharge rate characteristics could be improved. However, in Examples B6 and B7, powder shedding occurred due to the low viscosity of the binder component.

The above Examples each illustrate the case where the electrode according to the present invention was used as

a button cell negative electrode, but the present invention is not limited thereto. Instead, the electrode according to the present invention may be used as a button cell positive electrode. In addition, the non-aqueous electrolyte battery is not limited to a "button cell" and may be a battery having another shape such as a cylindrical shape.

In the above Examples, the electrolyte was liquid, but the electrolyte is not limited thereto, and an electrolyte in another form such as gel may also be used.

INDUSTRIAL APPLICABILITY

The electrode of the present invention can improve the capacity retention rates of various electrochemical devices, and such electrochemical devices can be used, for example, in mobile terminals such as smartphones and notebook computers and in various vehicles (e.g., electric vehicles and hybrid vehicles) that utilize electrochemical devices as power supply units.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

[Reference Numerals]

| | |
|---|---|
| 1 | current collector |
| 2 | active material |
| 3 | void |
| 4 | positive electrode |
| 4a | positive electrode current collector |
| 4b | positive electrode active material component layer |
| 5 | negative electrode |
| 5a | negative electrode current collector |
| 5b | negative electrode active material component layer |
| 6 | separator |

**Claims**

**1.** An electrode comprising a current collector and an active material, wherein

the current collector has a three-dimensional porous structure having an average opening diameter A,
the active material has a median diameter ($D_{50}$) B, and
the average opening diameter A ($\mu$m) and the median diameter ($D_{50}$) B ($\mu$m) satisfy a relationship of the following formula (1),

$$0.10 \leq B/A \leq 2.00 \qquad (1).$$

**2.** The electrode according to claim 1, wherein

the current collector is filled with an active material component containing the active material, and
a filling rate (%) defined by the following formula (2) is 37% or more,

$$\text{filling rate (\%)} = \beta/(\alpha - \gamma) \times 100 \qquad (2),$$

where $\alpha$ denotes an observation area, the observation area being defined by thickness $\times$ observation length of the current collector, which are determined from an electron microscope image of a cross-section in a thickness direction of the electrode, and $\beta$ and $\gamma$ respectively denote projected areas of the active material and the current collector in the observation area, the projected areas being calculated using image analysis software.

**3.** An electrode comprising a current collector having a three-dimensional porous structure, wherein

the current collector is filled with an active material component containing an active material, and
a filling rate (%) defined by the following formula (2) is 37% or more,

$$\text{filling rate (\%)} = \beta/(\alpha - \gamma) \times 100 \qquad (2),$$

where $\alpha$ denotes an observation area, the observation area being defined by thickness $\times$ observation length of the current collector, which are determined from an electron microscope image of a cross-section in a thickness direction of the electrode, and $\beta$ and $\gamma$ respectively denote projected areas of the active material and the current collector in the observation area, the projected areas being calculated using image analysis software.

**4.** The electrode according to claim 3, wherein the filling rate is 45% or more.

**5.** The electrode according to any one of claims 1 to 4, wherein the current collector has a thickness of 100 μm or less.

**6.** The electrode according to any one of claims 1 to 4, wherein the current collector has an air permeability of 0.1 to 600 $cc/cm^2/sec$.

**7.** The electrode according to any one of claims 1 to 4, wherein the current collector includes a non-conductive structure and a metal coating.

**8.** The electrode according to claim 7, wherein the non-conductive structure is composed of a fiber aggregate having an average fiber diameter of 10 μm or less.

**9.** The electrode according to claim 8, wherein the fiber aggregate is a nonwoven fabric.

**10.** The electrode according to claim 7, wherein the metal coating includes at least one metal selected from the group consisting of aluminum, copper, nickel, gold, and silver.

**11.** The electrode according to any one of claims 1 to 4, wherein the active material is capable of adsorbing and desorbing electrolyte ions.

**12.** The electrode according to any one of claims 1 to 4, further comprising a conductive agent.

**13.** The electrode according to any one of claims 2 to 4, wherein the active material has a median diameter of 0.1 to 16 μm.

**14.** The electrode according to any one of claims 2 to 4, wherein the active material component includes a water-insoluble binder.

**15.** A method for producing the electrode according to claim 1 or 2, the method comprising at least:

preparing a current collector having a three-dimensional porous structure having an average opening diameter A; and
forming an active material layer including an active material having a median diameter B on the current collector, wherein
the average opening diameter A and the median diameter B satisfy the formula (1).

**16.** A method for producing the electrode according to any one of claims 2 to 4, the method comprising at least filling a current collector having a three-dimensional porous structure with an active material component.

**17.** The method for producing the electrode according to claim 16, wherein the current collector before being filled with the active material component has an air permeability of 0.1 to 600 $cc/cm^2/sec$.

**18.** The method for producing the electrode according to claim 16, wherein the current collector before being filled with the active material component has a thickness of 100 μm or less.

**19.** An electrochemical device comprising the electrode according to any one of claims 1 to 14.

Fig. 1

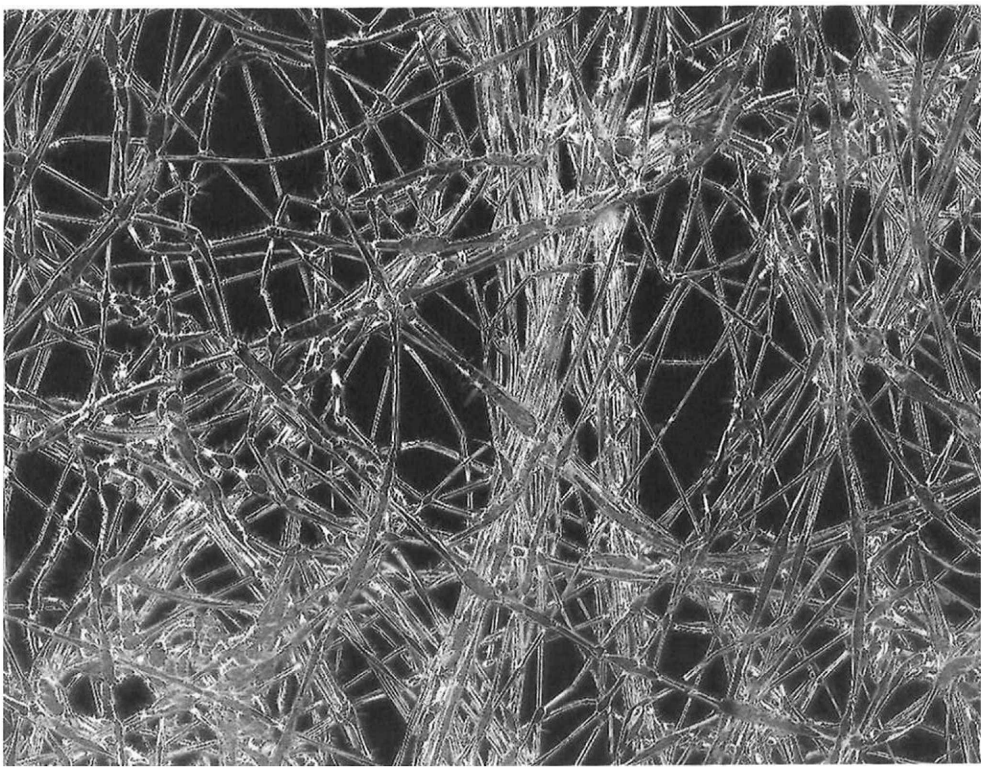

Fig. 2

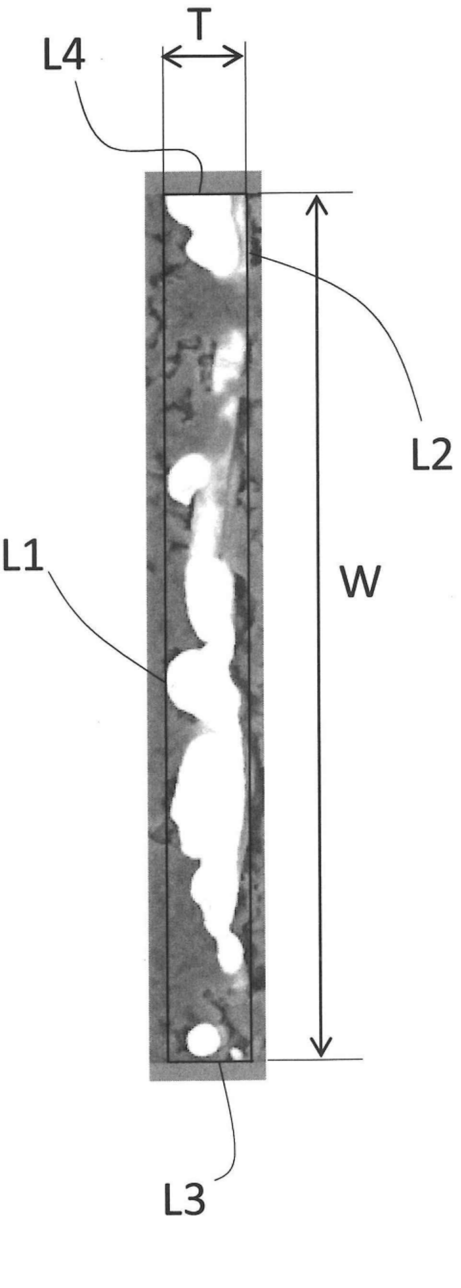

Fig. 3

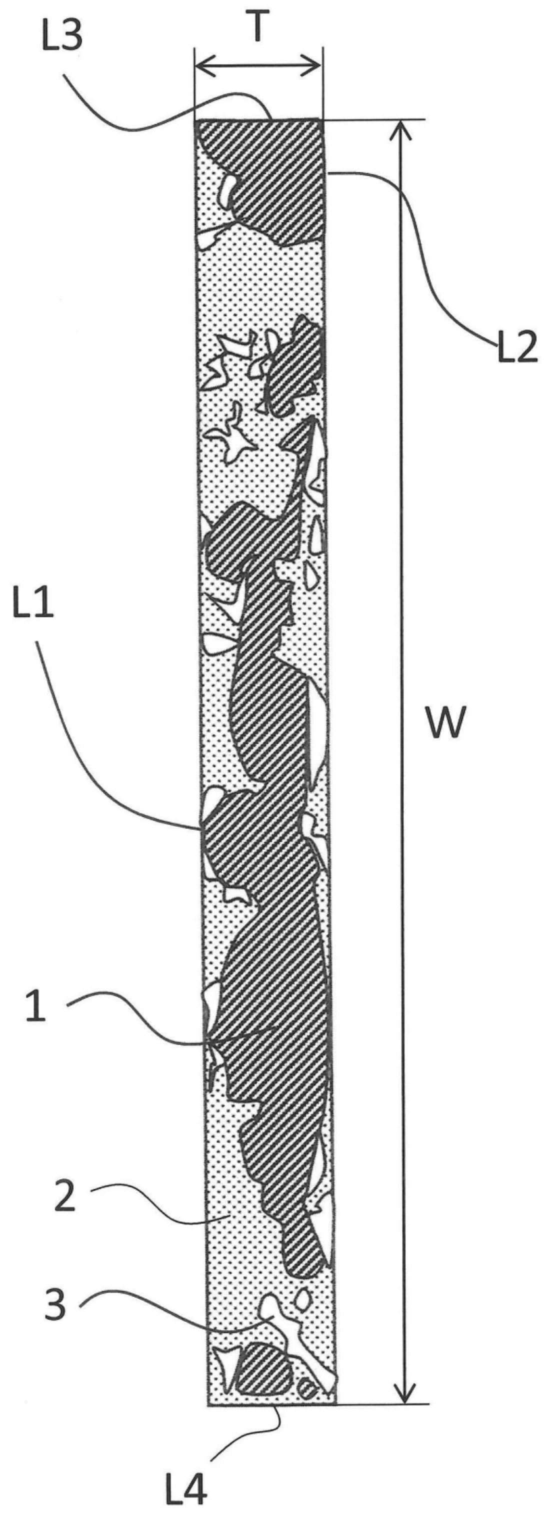

Fig. 4

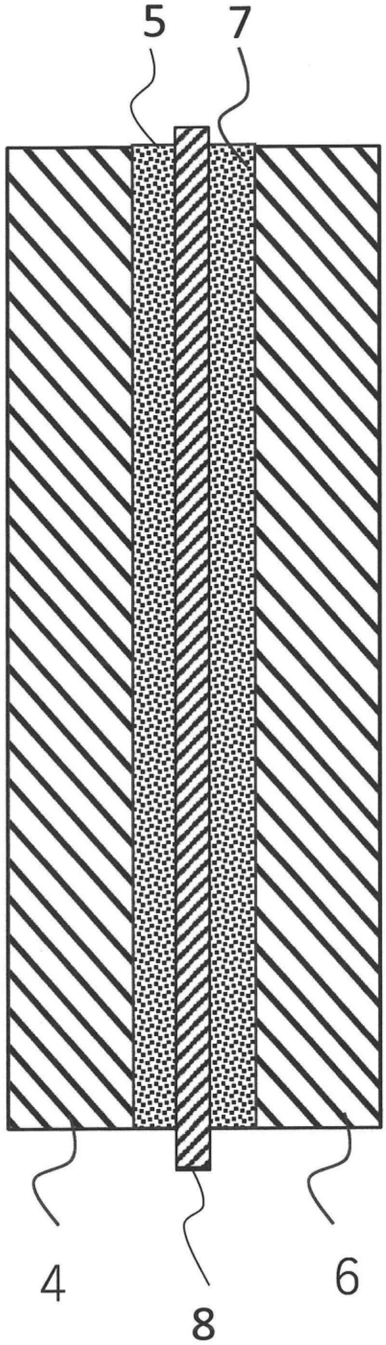

## INTERNATIONAL SEARCH REPORT

International application No.
**PCT/JP2024/012122**

**A. CLASSIFICATION OF SUBJECT MATTER**

***H01M 4/02***(2006.01)i; ***H01G 11/06***(2013.01)i; ***H01G 11/40***(2013.01)i; ***H01G 11/68***(2013.01)i; ***H01G 11/70***(2013.01)i; ***H01M 4/04***(2006.01)i; ***H01M 4/13***(2010.01)i; ***H01M 4/139***(2010.01)i; ***H01M 4/62***(2006.01)i; ***H01M 4/66***(2006.01)i; ***H01M 4/80***(2006.01)i

FI: H01M4/02 Z; H01G11/06; H01G11/40; H01G11/68; H01G11/70; H01M4/04 Z; H01M4/13; H01M4/139; H01M4/62 Z; H01M4/66 A; H01M4/80 C

According to International Patent Classification (IPC) or to both national classification and IPC

**B. FIELDS SEARCHED**

Minimum documentation searched (classification system followed by classification symbols)

H01M4/02; H01G11/06; H01G11/40; H01G11/68; H01G11/70; H01M4/04; H01M4/13; H01M4/139; H01M4/62; H01M4/66; H01M4/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2014-197479 A (MITSUBISHI MATERIALS CORPORATION) 16 October 2014 (2014-10-16)<br>paragraphs [0054]-[0061], [0075]-[0078], [0088]-[0091], [0141] | 1-6, 11-19<br>7-10 |
| A | WO 2013/145752 A1 (UACJ CORP.) 03 October 2013 (2013-10-03) | 1-19 |
| A | JP 2012-109224 A (UBE INDUSTRIES, LTD.) 07 June 2012 (2012-06-07) | 1-19 |
| A | WO 2022/118692 A1 (KURARAY KURAFLEX CO., LTD.) 09 June 2022 (2022-06-09) | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **31 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**

International application No.
**PCT/JP2024/012122**

**C. DOCUMENTS CONSIDERED TO BE RELEVANT**

| Category* | Citation of document, with indication, where appropriate, of the relevant passages | Relevant to claim No. |
|---|---|---|
| A | JP 2010-92721 A (TOYOTA JIDOSHA KABUSHIKI KAISHA) 22 April 2010 (2010-04-22) | 1-19 |

Form PCT/ISA/210 (second sheet) (July 2022)

**INTERNATIONAL SEARCH REPORT**
**Information on patent family members**

International application No.
**PCT/JP2024/012122**

| Patent document cited in search report | Publication date (day/month/year) | Patent family member(s) | Publication date (day/month/year) |
|---|---|---|---|
| JP 2014-197479 A | 16 October 2014 | (Family: none) | |
| WO 2013/145752 A1 | 03 October 2013 | CN 104205427 A<br>KR 10-2015-0002631 A | |
| JP 2012-109224 A | 07 June 2012 | (Family: none) | |
| WO 2022/118692 A1 | 09 June 2022 | US 2023/0327134 A1<br>EP 4258391 A1<br>CN 116529911 A<br>KR 10-2023-0113753 A | |
| JP 2010-92721 A | 22 April 2010 | US 2010/0086849 A1<br>CN 101719542 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023056012 A
- JP 2023137490 A
- WO 2022118692 A